(19) Europäisches Patentamt
European Patent Office
Office européen des brevets

(11) **EP 4 237 810 B1**

(12) **EUROPÄISCHE PATENTSCHRIFT**

(45) Veröffentlichungstag und Bekanntmachung des Hinweises auf die Patenterteilung:
**31.12.2025   Patentblatt 2026/01**

(21) Anmeldenummer: **21801054.4**

(22) Anmeldetag: **25.10.2021**

(51) Internationale Patentklassifikation (IPC):
**G01L 3/10** *(2006.01)*        **B62M 6/50** *(2010.01)*
**B62J 45/411** *(2020.01)*        **B62J 45/421** *(2020.01)*

(52) Gemeinsame Patentklassifikation (CPC):
**G01L 3/102; B62J 45/411; B62J 45/421**

(86) Internationale Anmeldenummer:
**PCT/EP2021/079461**

(87) Internationale Veröffentlichungsnummer:
**WO 2022/090117 (05.05.2022 Gazette 2022/18)**

(54) **MAGNETOELASTISCHER DREHMOMENTSENSOR MIT ERWEITERTER STÖRFELDKOMPENSATION**

MAGNETO-ELASTIC TORQUE SENSOR WITH EXTENDED INTERFERENCE FIELD COMPENSATION

CAPTEUR DE COUPLE MAGNÉTO-ÉLASTIQUE AVEC COMPENSATION DE CHAMP INTERFÉRENCE ÉTENDU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.10.2020   DE 102020213669**

(43) Veröffentlichungstag der Anmeldung:
**06.09.2023   Patentblatt 2023/36**

(73) Patentinhaber: **Robert Bosch GmbH**
**70442 Stuttgart (DE)**

(72) Erfinder:
• BREITFELD, Andreas
  70567 Stuttgart (DE)
• OSSMANN, Christoph
  72768 Reutlingen (DE)
• ZEGOWITZ, Michael
  72070 Tuebingen (DE)
• SCHATZ, Frank
  70806 Kornwestheim (DE)
• SCHICKLE, Sven
  72070 Tuebingen (DE)

(56) Entgegenhaltungen:
WO-A1-2018/109674        US-A- 4 989 460
US-A1- 2013 125 669

**Beschreibung**

Stand der Technik

Die vorliegende Erfindung betrifft einen magnetoelastischen Drehmomentsensor sowie ein Fahrzeug, insbesondere ein elektrisch und/oder mittels Muskelkraft antreibbares Fahrzeug, welches einen magnetoelastischen Drehmomentsensor aufweist. Ferner betrifft die Erfindung ein Verfahren zum Bestimmen eines Drehmoments unter Verwendung eines magnetoelastischen Drehmomentsensors.

Ein magnetoelastischer Drehmomentsensor mit einer teilweise magnetisierten Welle ist seit Jahren bekannt. Bei einer Drehmomentbelastung der Welle entsteht ein Magnetfeld im Bereich außerhalb der Welle, welches an jeder Stelle proportional zum auf die Welle ausgeübten Drehmoment ist und mittels Magnetfeldsensoren des Drehmomentsensors gemessen werden kann. Die Messung des Magnetfeldes ermöglicht daher die Bestimmung des Drehmomentes. Eine ideale Drehmomentmessung ist damit aber nur möglich, wenn keine weiteren Magnetfelder, die nicht durch das Drehmoment erzeugt wurden, vorhanden sind. Diesbezüglich kennt der Stand der Technik magnetoelastische Drehmomentsensoren, die jeweils eine Welle mit zwei magnetisierten Bereichen zur Kompensierung von homogenen magnetischen Störfeldern oder eine Welle mit drei magnetisierten Bereichen zur Kompensierung von linearen magnetischen Störfeldern aufweisen.

Für die Erfindung relevante Dokumente zum Stand der Technik sind die Patentdokumente US 2013/125669 A1, WO 2018/109674 A1 und US 4 989 460 A.

Offenbarung der Erfindung

Der erfindungsgemäße magnetoelastische Drehmomentsensor ist in den beigefügten Ansprüchen 1-16 definiert und ein Verfahren zur Bestimmung eines Drehmoments ist im beigefügten Anspruch 17 definiert.

Der erfindungsgemäße magnetoelastische Drehmomentsensor weist den Vorteil auf, dass dieser eine platzsparende störfeldkompensierte Fluss- bzw. Drehmomentmessung ermöglicht. Dies wird dadurch erreicht, dass bei dem magnetoelastischen Drehmomentsensor, der mindestens drei Magnetfeldsensoren aufweist, in die Fluss- bzw. Drehmomentmessung die Abstände und insbesondere ein Abstandverhältnis der Magnetfeldsensoren einfließt. Durch die Berücksichtigung der Abstände der Magnetfeldsensoren relativ zueinander und entsprechende Gewichtung bzw. Skalierung der Messsignale der Magnetfeldsensoren können die Messsignale so miteinander kombiniert werden, dass bei der Berechnung des Drehmoments homogene Störfelder und lineare Störfeldgradienten eliminiert werden. Dazu umfasst der magnetoelastische Drehmomentsensor eine Welle mit mindestens einem magnetisierten Bereich, wobei die Welle eine Axialrichtung und eine Radialrichtung aufweist, mindestens drei Magnetfeldsensoren, die jeweils mindestens eine Messachse aufweisen und eingerichtet sind, eine Komponente einer magnetischen Flussdichte eines Magnetfeldes in Richtung der mindestens einen Messachse zu erfassen, und eine Auswerteeinheit. Die mindestens drei Magnetfeldsensoren umfassen einen ersten Magnetfeldsensor, einen zweiten Magnetfeldsensor und einen dritten Magnetfeldsensor. Dabei ist der zweite Magnetfeldsensor in der Axialrichtung zwischen dem ersten Magnetfeldsensor und dem dritten Magnetfeldsensor angeordnet. Mindestens ein Magnetfeldsensor aus den mindestens drei Magnetfeldsensoren ist relativ zu dem mindestens einen magnetisierten Bereich derart angeordnet, dass der Magnetfeldsensor eingerichtet ist, eine Komponente einer magnetischen Flussdichte eines Magnetfeldes in Richtung der jeweiligen mindestens einen Messachse zu erfassen, welches bei einer Drehmomentbeanspruchung der Welle durch den mindestens einen magnetisierten Bereich erzeugbar ist. Die Auswerteeinheit ist eingerichtet, mindestens ein Messsignal des ersten Magnetfeldsensors, mindestens ein Messsignal des zweiten Magnetfeldsensors und mindestens ein Messsignal des dritten Magnetfeldsensors zu erfassen und ein auf die Welle ausgeübtes Drehmoment basierend auf dem mindestens einen Messsignal des ersten Magnetfeldsensors, dem mindestens einen Messsignal des zweiten Magnetfeldsensors, dem mindestens einen dritten Messsignal und einem Verhältnis eines Abstands zwischen dem zweiten Magnetfeldsensor und dem dritten Magnetfeldsensor in der Axialrichtung zu einem Abstand zwischen dem ersten Magnetfeldsensor und dem zweiten Magnetfeldsensor in der Axialrichtung zu bestimmen. Durch den vorgeschlagenen magnetoelastischen Drehmomentsensor, insbesondere durch das Berücksichtigen des beschriebenen Abstandsverhältnisses bei der Bestimmung des Drehmoments, können die Messsignale der mindestens drei Magnetfeldsensoren derart verrechnet werden, dass insbesondere homogene Störfelder und lineare Störfeldgradienten in der Axialrichtung kompensiert werden können. Somit wird die Berechnung eines weitgehend störfeldbereinigten Drehmoments erzielt, welches sowohl frei von homogenen Störfeldanteilen als auch frei von linearen Störfeldgradienten in der Axialrichtung ist. Darüber hinaus vorteilhaft bei der Erfindung ist, dass zur Eliminierung/Kompensierung von homogenen Störfeldern und linearen Störfeldgradienten keine Näherungen bei der Berechnung des Drehmoments zu machen sind. Da keine Näherungen erforderlich sind, kann eine genaue Bestimmung des Drehmoments erzielt werden. Ein wesentlicher Vorteil der Erfindung ist, dass eine Störfeldeliminierung/-kompensierung bereits durch einen magnetoelastischen Drehmomentsensor mit einer Welle mit nur einem magnetisierten Bereich oder nur zwei magnetisierten Bereichen realisierbar ist. Da ein magnetisierter Bereich eine Mindestbreite haben muss, um stabil und reproduzierbar magnetisiert werden zu können, und der Übergang von einem magnetisierten Bereich in einen anderen magnetisierten Bereich nie schlagartig erfolgen kann, führt das Verzichten auf einen zusätzlichen magnetisierten Bereich oder auf zwei zusätzliche magnetisierte Bereiche zu einer erheblichen Reduzierung der Baugröße des magnetoelastischen Drehmomentsensors in der Axialrichtung. Ein weiterer Vorteil des vorgeschlagenen magnetoelastischen Drehmomentsensors besteht darin, dass sich homogene Störfelder und lineare Störfeldgradienten in der Axialrichtung berechnen und überwachen lassen. Die Verwendung von mindestens vier Sensoren bietet darüber hinaus den weiteren Vorteil, gewisse nichtlineare Störfeldgradienten in der Axialrichtung zu eliminieren oder den durch sie entstehenden Fehler zu verringern.

Vorzugsweise sind mindestens zwei Magnetfeldsensoren aus den mindestens drei Magnetfeldsensoren, insbesondere die mindestens drei Magnetfeldsensoren, relativ zu dem mindestens einen magnetisierten Bereich derart angeordnet, dass die mindestens zwei Magnetfeldsensor, insbesondere die mindestens drei Magnetfeldsensoren, eingerichtet sind, jeweils eine Komponente einer magnetischen Flussdichte eines Magnetfeldes in Richtung der jeweiligen mindestens einen Messachse zu erfassen, welches bei einer Drehmomentbeanspruchung der Welle durch den mindestens einen magnetisierten Bereich erzeugbar ist.

Die Welle kann insbesondere als Hohlwelle ausgebildet sein.

Die magnetische Flussdichte des durch den mindestens einen magnetisierten Bereich der Welle erzeugbaren Magnetfeldes bei einer Drehmomentbelastung der Welle ist an jeder Stelle proportional zum auf die Welle aufgebrachten Drehmoment. Dieses Magnetfeld kann im Rahmen der Erfindung auch als Nutzfeld bezeichnet werden.

Im Falle eines Magnetstörfelds im Umfeld der Welle bzw. des magnetoelastischen Magnetsensors umfasst das Magnetfeld, dessen magnetische Flussdichte durch die mindestens drei Magnetfeldsensoren erfassbar ist, ein bei einer Drehmomentbelastung der Welle durch den mindestens einen magnetisierten Bereich erzeugtes Magnetfeld (Nutzfeld) und das Magnetstörfeld. Dabei umfasst ein Messsignal eines jeweiligen Magnetfeldsensors eine zum auf die Welle aufgebrachten Drehmoment proportionale magnetische Flussdichte des Nutzfeldes und die magnetische Flussdichte des überlagerten Magnetstörfeldes an der Position des jeweiligen Magnetfeldsensors. Wenn kein Magnetstörfeld im Umfeld der Welle bzw. des magnetoelastischen Magnetsensors vorliegt, umfasst ein Messsignal eines jeweiligen Magnetfeldsensors bei einer Drehmomentbeanspruchung der Welle nur die zum Drehmoment proportionale magnetische Flussdichte des erzeugten Nutzfeldes an der Position des jeweiligen Magnetfeldsensors.

Insbesondere sind das mindestens eine Messsignal des ersten Magnetfeldsensors, das mindestens eine Messsignal des zweiten Magnetfeldsensors und das mindestens eine Messsignal des dritten Magnetfeldsensors offsetbereinigte Messsignale. Die Offsetbereinigung erfolgt in vorteilhafter Weise in einem drehmomentfreien und störfeldfreien Zustand.

Die genannten Störfeldkompensationseigenschaften (der Drehmomentberechnung) bleiben unabhängig von initialen Positionierungstoleranzen der Gesamtheit/Baugruppe der mindestens drei Magnetfeldsensoren relativ zur Welle und damit auch unabhängig von initialen Magnetisierungstoleranzen des mindestens einen magnetisierten Bereichs der Welle vollständig erhalten. Der Grund hierfür liegt in der Erfindung begründet. Sie erlaubt es, dass alle Sensoren beliebige (und damit auch unterschiedliche) (zum Drehmoment aber proportionale) Nutzfelder sehen dürfen und nicht zwei Sensoren das gleiche Nutzfeld sehen müssen zur Erfüllung des Zwecks.

Es sei angemerkt, dass im Rahmen der Erfindung der magnetoelastische Drehmomentsensor auch als magnetoelastische Drehmomentsensoranordnung bezeichnet werden kann. Entsprechend können die Magnetfeldsensoren im Rahmen der Erfindung auch als Magnetfeldsensorelemente bezeichnet werden.

Die Welle kann im Rahmen der Erfindung insbesondere auch als magnetoelastische Welle bezeichnet werden. "Magnetoelastisch" bedeutet, dass das Entstehen einer mechanischen Spannung in der Welle aufgrund einer mechanischen Beanspruchung der Welle zu einer Änderung ihrer Magnetisierung führt. Mit anderen Worten basiert der magnetoelastische Drehmomentsensor auf dem inversen magnetostriktiven Effekt.

Die Formulierung, dass die Welle eine Axialrichtung aufweist, bedeutet insbesondere, dass sich die Welle in der Axialrichtung erstreckt.

Der magnetoelastische Drehmomentsensor kann vorzugsweise als eine Einheit ausgebildet bzw. hergestellt sein, wobei alle Komponenten des Drehmomentsensors bzw. die Magnetfeldsensoren, die Welle und die Auswerteeinheit in einem einzigen Gehäuse angeordnet sind. Alternativ können mindestens drei Magnetfeldsensoren, eine Welle (magnetoelastische Welle) mit mindestens einem magnetisierten Bereich und die zuvor beschriebene Auswerteeinheit zum Wirken als ein magnetoelastischer Drehmomentsensor gemäß der Erfindung miteinander kombiniert werden, ohne dass diese Komponenten in ein einziges Gehäuse eingebracht werden.

Nach einer bevorzugten Ausführung der Erfindung kann/können die mindestens eine Messachse des ersten Magnetfeldsensors und/oder die mindestens eine Messachse des zweiten Magnetfeldsensors und/oder die mindestens eine Messachse des dritten Magnetfeldsensors jeweils eine in der Axialrichtung oder der Radialrichtung der Welle parallele Messachse umfassen. Dabei kann/können das mindestens eine Messsignal des ersten Magnetfeldsensors ein erstes Messsignal umfassen, welches einer Komponente der magnetischen Flussdichte des Magnetfeldes in der Axialrichtung oder der Radialrichtung der Welle an der Position des ersten Magnetfeldsensors entspricht, und/oder das mindestens eine Messsignal des zweiten Magnetfeldsensors ein zweites Messsignal umfassen, welches einer Komponente der magnetischen Flussdichte des Magnetfeldes in der Axialrichtung oder der Radialrichtung der Welle an der Position des zweiten Magnetfeldsensors entspricht und/oder das mindestens eine Messsignal des dritten Magnetfeldsensors ein drittes Messsignal umfasst, welches einer Komponente der magnetischen Flussdichte des Magnetfeldes in der Axialrichtung oder der Radialrichtung der Welle an der Position des dritten Magnetfeldsensors entspricht.

Nach einer alternativen Ausgestaltung der Erfindung kann/können die mindestens eine Messachse des ersten Magnetfeldsensors und/oder die mindestens eine Messachse des zweiten Magnetfeldsensors und/oder die mindestens eine Messachse des dritten Magnetfeldsensors jeweils zwei oder drei orthogonal zueinander ausgerichtete Messachsen umfassen. Dabei kann/können das mindestens eine Messsignal des ersten Magnetfeldsensors zwei oder drei Messsignale und/oder das mindestens eine Messsignal des zweiten Magnetfeldsensors zwei oder drei Messsignale und/oder das mindestens eine Messsignal des dritten Magnetfeldsensors zwei oder drei Messsignale umfassen, wobei aus den zwei oder drei Messsignalen eines jeweiligen Magnetfeldsensors eine Komponente der magnetischen Flussdichte des Magnetfeldes in der Axialrichtung oder der Radialrichtung der Welle an der jeweiligen Position des Magnetfeldsensors bestimmbar sein kann. Die Bestimmung der Komponente der magnetischen Flussdichte des Magnetfeldes in der Axialrichtung oder der Radialrichtung der Welle an der jeweiligen Position des Magnetfeldsensors kann vorzugsweise mittels der Auswerteeinheit erfolgen.

Insbesondere können die mindestens drei Magnetfeldsensoren bevorzugt jeweils einachsig oder mehrachsig, insbesondere dreiachsig, sein, wobei die mindestens drei Magnetfeldsensoren in vorteilhafter Weise auf einer Geraden platziert sind, welche parallel zur Axialrichtung ist, wobei mindestens eine Messachse eines jeweiligen Magnetfeldsensors in Axialrichtung ausgerichtet ist. Alternativ ist mindestens eine Messachse eines jeweiligen Magnetfeldsensors in Radialrichtung ausgerichtet. Alternativ sind zwei Messachsen eines jeweiligen Magnetfeldsensors orthogonal zueinander und orthogonal zur Radialrichtung ausgerichtet, sodass aus ihnen jeweils die Komponente der magnetischen Flussdichte eines Magnetfeldes in Axialrichtung bestimmbar ist. Alternativ sind drei Messachsen eines jeweiligen Magnetfeldsensors orthogonal zueinander ausgerichtet, sodass aus ihnen jeweils die Komponenten der magnetischen Flussdichte eines Magnetfeldes in Axialrichtung und/oder Radialrichtung bestimmbar sind, wobei die Orientierung eines jeweiligen Magnetfeldsensors frei wählbar ist. Es sei angemerkt, dass für die Eliminierung von homogenen Störfeldern und linearen Störfeldgradienten einachsige Magnetfeldsensoren ausreichend sind. Durch die Ermöglichung des Einsatzes von einachsigen Magnetfeldsensoren ist ein magnetoelastischer Drehmomentsensor mit geringeren Gesamtkosten realisierbar. Beispielsweise können die Magnetfeldsensoren als Flux-Gate-Spulen ausgebildet sein, die äußerst kostengünstig sind. Der Einsatz von mehrachsigen Magnetfeldsensoren, die den Vorteil der Lieferung von Mehrinformationen aufweisen, ermöglicht ergänzende Überwachungsfunktionen des magnetoelastischen Drehmomentsensors. Bevorzugt ist die Auswerteeinheit eingerichtet, zum Bestimmen des auf die Welle ausgeübten Drehmoments zusätzlich eine Sensitivität des magnetoelastischen Drehmomentsensors zu verwenden. Mit anderen Worten ist die Auswerteeinheit eingerichtet, das auf die Welle ausgeübte Drehmoment mittels des mindestens einen Messsignals des ersten Magnetfeldsensors, des mindestens einen Messsignals des zweiten Magnetfeldsensors, des mindestens einen Messsignals des dritten Magnetfeldsensors, des Verhältnisses des Abstands zwischen dem zweiten Magnetfeldsensor und dem dritten Magnetfeldsensor in der Axialrichtung zum Abstand zwischen dem ersten Magnetfeldsensor und dem zweiten Magnetfeldsensor in der Axialrichtung und einer Sensitivität des magnetoelastischen Drehmomentsensors zu bestimmen. Unter Sensitivität bzw. Empfindlichkeit des magnetoelastischen Drehmomentsensors wird die Änderung des Wertes der Ausgangsgröße, d.h., des Drehmoments, bezogen auf die sie verursachende Änderung des Wertes der Eingangsgröße, d.h. der magnetischen Flussdichte verstanden. Die Sensitivität des magnetoelastischen Drehmomentsensors kann im Rahmen der Erfindung insbesondere auch als Gesamtsensitivität bezeichnet werden.

Vorzugsweise ist die Auswerteeinheit eingerichtet, das auf die Welle ausgeübte Drehmoment mittels der Formel

$$M=\left[\left(B_{SE2}-B_{SE3}\right)-\frac{d_{23}}{d_{12}}\times(B_{SE1}-B_{SE2})\right]\times s_{13} \qquad (1)$$

zu bestimmen. Dabei sind:

- M das zu bestimmende Drehmoment in "Nm",
- $B_{SE1}$ die Komponente der magnetischen Flussdichte des Magnetfeldes in der Axialrichtung bzw. in der Radialrichtung an der Position des ersten Magnetfeldsensors in "μT",
- $B_{SE2}$ die Komponente der magnetischen Flussdichte des Magnetfeldes in der Axialrichtung bzw. in der Radialrichtung an der Position des zweiten Magnetfeldsensors in "μT",
- $B_{SE3}$ die Komponente der magnetischen Flussdichte des Magnetfeldes in der Axialrichtung bzw. in der Radialrichtung an der Position des dritten Magnetfeldsensors in "μT",
- $d_{12}$ der Abstand zwischen dem ersten Magnetfeldsensor und dem zweiten Magnetfeldsensor in "mm",
- $d_{23}$ der Abstand zwischen dem zweiten Magnetfeldsensor und dem dritten Magnetfeldsensor in "mm",

- und $s_{13}$ die Sensitivität des magnetoelastischen Drehmomentsensors in "Nm/$\mu$T".

Durch die vorgeschlagene Formel (1) und insbesondere die darin enthaltene Differenzbildung können homogene Störfelder und lineare Störfeldgradienten eliminiert werden, wodurch eine genaue Bestimmung des Drehmoments anhand der Messsignale des ersten Magnetfeldsensors, des zweiten Magnetfeldsensors und des dritten Magnetfeldsensors ermöglicht wird.

Nach einer weiteren bevorzugten Ausgestaltung der Erfindung ist die Auswerteeinheit eingerichtet, das auf die Welle ausgeübte Drehmoment mittels der Formel

$$M = \left[ (B_{SE2} - B_{SE3}) - k \times \frac{d_{23}}{d_{12}} \times (B_{SE1} - B_{SE2}) \right] \times s_{13} \qquad (2)$$

mit k $\neq$ 1,
insbesondere mit 0,9$\leq$k<1 oder 1<k$\leq$1,1
zu bestimmen. Dabei sind:

- M das zu bestimmende Drehmoment in "Nm",
- $B_{SE1}$ die Komponente der magnetischen Flussdichte des Magnetfeldes in der Axialrichtung bzw. in der Radialrichtung an der Position des ersten Magnetfeldsensors in "$\mu$T",
- $B_{SE2}$ die Komponente der magnetischen Flussdichte des Magnetfeldes in der Axialrichtung bzw. in der Radialrichtung an der Position des zweiten Magnetfeldsensors in "$\mu$T",
- $B_{SE3}$ die Komponente der magnetischen Flussdichte des Magnetfeldes in der Axialrichtung bzw. in der Radialrichtung an der Position des dritten Magnetfeldsensors in "$\mu$T",
- $d_{12}$ der Abstand zwischen dem ersten Magnetfeldsensor und dem zweiten Magnetfeldsensor in "mm",
- $d_{23}$ der Abstand zwischen dem zweiten Magnetfeldsensor und dem dritten Magnetfeldsensor in "mm",
- $s_{13}$ die Sensitivität des magnetoelastischen Drehmomentsensors in "Nm/$\mu$T", und
- k ein vorbestimmter Gewichtsfaktor, durch den bei vorhandenen nichtlinearen Störfeldanteilen durch einen stets gleich ausgebildeten nichtlinearen Störfeldgradienten im Umfeld der Welle bzw. des magnetoelastischen Drehmomentsensors ein durch die nichtlinearen Störfeldanteile verursachter Fehler beim Bestimmen des Drehmoments reduziert werden kann.

Mit anderen Worten kann durch die Einführung des Gewichtsfaktors "k" in die Drehmomentbestimmung gemäß der vorgeschlagenen Formel (2) vom Abstandsverhältnis $d_{23}/d_{12}$ derart abgewichen werden, dass im Falle von Störfeldern mit nichtlinearen Anteilen im Umfeld der Welle bzw. des magnetoelastischen Drehmomentsensors ein durch die nichtlinearen Störfeldanteile verursachter Fehler reduziert werden kann. Dies trifft besonders in einer Zielanwendung mit stets gleich ausgebildeten nichtlinearen Störfeldgradienten im Bereich des magnetoelastischen Drehmomentsensors zu. In orts- und umgebungsveränderlichen Anwendungen hingegen, in denen die Annahme eines stets gleich ausgebildeten nichtlinearen Störfeldgradienten unzutreffend ist da veränderliche Ausbildungen des Störfeldgradienten auftreten können, kann der verursachte Fehler bei der Drehmomentberechnung gegenüber Formel (1) größer ausfallen, sodass in derartigen Anwendungen mit Formel (2) der größtmögliche Fehler weiter reduziert werden kann.

Der Gewichtsfaktor k kann anwendungsspezifisch gewählt bzw. vorbestimmt sein/werden.

Realisierbar wäre hier eine Feinjustage des Gewichtsfaktors k über den mathematischen Optimierungsansatz $dMSE(k)/dk = 0$ zur (gewichteten) Minimierung des mittleren quadratischen Fehlers (MSE). So könnte z.B. der "0 Nm"-Punkt auf einen minimalen Fehler über eine gewisse Auswahl an Szenarien mit verschiedenen Störeinflüssen optimiert werden, oder auch nur ein Störfeldszenario optimiert werden.

Wenn im Bereich des magnetoelastischen Drehmomentsensors nur homogene Störfelder und/oder Störfelder mit linearen Anteilen und/oder lediglich vernachlässigbare nichtlineare Störfeldanteile vorhanden sind, oder nur solche Störfelder bei einer Anwendung erwartet sind, ist zum Bestimmen eines auf die Welle des magnetoelastischen Drehmomentsensors wirkenden Drehmoments zwischen den Formeln (1) und (2) ebenso Formel (1) zu bevorzugen, wie bei einem Einsatz in orts- und umgebungsveränderlichen Anwendungen, bei denen kein stets gleich ausgebildeter nichtlinearer Störfeldgradient garantiert werden kann.

Es sei allerdings angemerkt, dass auch bei Formel (1) ein auf die Welle wirkendes Drehmoment mit ausreichender Genauigkeit bestimmt werden kann, selbst im Falle eines im Umfeld der Welle vorliegenden Störfelds mit nichtlinearen Anteilen. Vorteil bei Formel (1) ist, dass die linearen Störfeldanteile vollständig kompensiert werden, unabhängig von Applikation und Betriebsumgebung. Da allgemein die nichtlinearen Anteile verglichen zu den homogenen und linearen Anteilen gering sind, ist der bei Formel (1) entstehende Fehler durch nichtlineare Anteile bereits derart gering, dass das Drehmoment mit ausreichender/hoher Genauigkeit bestimmt werden kann.

Formel (2) zielt insbesondere anders als Formel (1) nicht mehr darauf ab, jegliche Störfeldszenarien möglichst vollständig zu kompensieren (homogene und lineare Anteile), sondern ermöglicht eine Optimierung auf ein oder wenige ähnliche Störfeldszenarien, welche besser kompensiert werden können als mit Formel (1), da nichtlineare Anteile teils ebenfalls kompensiert werden. Dabei würden andere Störfeldszenarien als diejenigen, auf die optimiert wurde, zu einem größeren Fehler führen als dies mit Formel (1) der Fall wäre. Auch alle Störfeldszenarien "ohne" nichtlineare Anteile können in vorteilhafter Weise mit Formel (1) fehlerfrei kompensiert werden.

In der Anwendung des magnetoelastischen Drehmomentsensors in einem Fahrzeug, insbesondere in einem elektrisch und/oder mit Muskelkraft betreibbaren Fahrzeug, insbesondere in einem Elektrofahrrad, treten während dem Betrieb allein durch die örtliche Veränderung während dem Fahren diverse deutlich unterschiedliche Störfeldszenarien ein (keine gleichleibende Betriebsumgebung), sodass eine Optimierung auf diese Diversität zu k=1 führt (wie bei Formel (1)) oder bei gewichteter Optimierung einzelner Störfeldszenarien ein $k \neq 1$ resultiert, wobei der maximal mögliche Fehler dann mit Formel (2) größer ist. Aus diesem Grund ist Formel (1) für die bereits beschriebene Anwendung vorteilhafter. In anderen Anwendungen mit gleichbleibendem Störfeldszenario bzw. wenig stark unterschiedlichen Szenarien kann Formel (2) vorteilhafter sein.

In vorteilhafter Weise wird die Sensitivität des magnetoelastischen Drehmomentsensors mittels Zweipunkt-Kalibrierung frei von Störfeldern und nach Offsetbereinigung ermittelt. Insbesondere wird die Sensitivität für Formel (1) gemäß der folgenden Formel ermittelt:

$$s_{13} = (M_2 - M_1) \Big/ \Big( \Big[ (B_{SE2}(M_2) - B_{SE3}(M_2)) - \frac{d_{23}}{d_{12}} \times (B_{SE1}(M_2) - B_{SE2}(M_2)) \Big] \dots$$

$$\dots - \Big[ (B_{SE2}(M_1) - B_{SE3}(M_1)) - \frac{d_{23}}{d_{12}} \times (B_{SE1}(M_1) - B_{SE2}(M_1)) \Big] \Big) \quad (3a)$$

Insbesondere wird die Sensitivität für Formel (2) gemäß der folgenden Formel ermittelt:

$$s_{13} = (M_2 - M_1) \Big/ \Big( \Big[ (B_{SE2}(M_2) - B_{SE3}(M_2)) - k \times \frac{d_{23}}{d_{12}} \times (B_{SE1}(M_2) - B_{SE2}(M_2)) \Big] \dots$$

$$\dots - \Big[ (B_{x,SE2}(M_1) - B_{SE3}(M_1)) - k \times \frac{d_{23}}{d_{12}} \times (B_{SE1}(M_1) - B_{SE2}(M_1)) \Big] \Big) \quad (3b)$$

Dabei sind:

- $M_1$ das Drehmoment in "Nm" beim ersten Punkt der Zweipunkt-Kalibrierung,
- $M_2$ das Drehmoment "Nm" beim zweiten Punkt der Zweipunkt-Kalibrierung,
- $B_{SEa}(M_b)$ das gemessene Messsignal des Magnetsensors "a" in "µT" beim Punkt "b" der Zweipunkt-Kalibrierung

    mit a=1 für den ersten Magnetfeldsensor, a=2 für den zweiten Magnetfeldsensor und a=3 für den dritten Magnetfeldsensor, und
    **b=1 für den** ersten Punkt und b=2 den zweiten Punkt der Zweipunkt-Kalibrierung,

- $d_{12}$ der Abstand zwischen dem ersten Magnetfeldsensor und dem zweiten Magnetfeldsensor in "mm", und
- $d_{23}$ der Abstand zwischen dem zweiten Magnetfeldsensor und dem dritten Magnetfeldsensor in "mm"
- k ein vorbestimmter Gewichtsfaktor, durch den bei vorhandenen nichtlinearen Störfeldanteilen durch einen stets gleich ausgebildeten nichtlinearen Störfeldgradienten im Umfeld der Welle bzw. des magnetoelastischen Drehmomentsensors ein durch die nichtlinearen Störfeldanteile verursachter Fehler beim Bestimmen des Drehmoments reduziert werden kann.

Es sei angemerkt, dass die Schreibweise "..." bei der obigen Formel bedeutet, dass die Formel in der nächsten Zeile fortgesetzt wird. Dies betrifft im Rahmen der vorliegenden Erfindung alle Formeln, die die Schreibweise "..." beinhalten. Dabei gilt für die Rechenoperationen die Standardrangfolge der Operatoren.

Die folgenden Formeln (1b) und (1c) sind äquivalent zu Formel (1) und ergeben sich aus Formel (1) durch Umformen:

$$M = \Big[ (B_{SE1} - B_{SE2}) - \frac{d_{12}}{d_{23}} \times (B_{SE2} - B_{SE3}) \Big] \times s_{13b} \quad (1b)$$

mit $s_{13b} = -s_{13} \times \dfrac{d_{23}}{d_{12}}$

$$M = \left[ (B_{SE1} - B_{SE3}) \times \frac{d_{23}}{d_{12}+d_{23}} - (B_{SE2} - B_{SE3}) \right] \times s_{13c} \qquad (1c)$$

mit $s_{13b} = -s_{13} \times \dfrac{d_{12}+d_{23}}{d_{12}}$

Vorzugsweise sind der erste Magnetfeldsensor, der zweite Magnetfeldsensor und der dritte Magnetfeldsensor relativ zueinander und zum mindestens einen magnetisierten Bereich derart angeordnet, dass eine der folgenden beiden Bedingungen erfüllt ist:

$$\left| (N_{SE2} - N_{SE3}) - \frac{d_{23}}{d_{12}} \times (N_{SE1} - N_{SE2}) \right| > 0 \ \mu T \quad \text{mit} \quad \frac{d_{23}}{d_{12}} \leq 1 \qquad (4a)$$

$$\left| (N_{SE1} - N_{SE2}) - \frac{d_{12}}{d_{23}} \times (N_{SE2} - N_{SE3}) \right| > 0 \ \mu T \quad \text{mit} \quad \frac{d_{12}}{d_{23}} < 1 \qquad (4b).$$

Insbesondere sind der erste Magnetfeldsensor, der zweite Magnetfeldsensor und der dritte Magnetfeldsensor relativ zueinander und zum mindestens einen magnetisierten Bereich derart angeordnet, dass eine der folgenden beiden Bedingungen erfüllt ist:

$$\left| (N_{SE2} - N_{SE3}) - \frac{d_{23}}{d_{12}} \times (N_{SE1} - N_{SE2}) \right| > 50 \ \mu T \quad \text{mit} \quad \frac{d_{23}}{d_{12}} \leq 1 \qquad (5a)$$

$$\left| (N_{SE1} - N_{SE2}) - \frac{d_{12}}{d_{23}} \times (N_{SE2} - N_{SE3}) \right| > 50 \ \mu T \quad \text{mit} \quad \frac{d_{12}}{d_{23}} < 1 \qquad (5b).$$

**Dabei sind:**

- $N_{SE1}$ eine vorbestimmte Komponente der magnetischen Flussdichte in "$\mu$T" eines durch den mindestens einen magnetisierten Bereich erzeugten Magnetfeldes an einer Position des ersten Magnetfeldsensors aufgrund einer Beanspruchung der Welle mit einem maximalen, durch den magnetoelastischen Drehmomentsensor messbaren Drehmoment,
- $N_{SE2}$ eine vorbestimmte Komponente der magnetischen Flussdichte in "$\mu$T" eines durch den mindestens einen magnetisierten Bereich erzeugten Magnetfeldes an einer Position des zweiten Magnetfeldsensors aufgrund einer Beanspruchung der Welle mit dem maximalen, durch den magnetoelastischen Drehmomentsensor messbaren Drehmoment, und
- $N_{SE3}$ eine vorbestimmte Komponente der magnetischen Flussdichte in "$\mu$T" eines durch den mindestens einen magnetisierten Bereich erzeugten Magnetfeldes an einer Position des dritten Magnetfeldsensors aufgrund einer Beanspruchung der Welle mit einem maximalen, durch den magnetoelastischen Drehmomentsensor messbaren Drehmoment.

Die Fallunterscheidung zwischen $(d_{23}/d_{12}) \leq 1$ und $(d_{12}/d_{23}) < 1$ stellt sicher, dass die effektive Gesamtsensitivität frei von künstlichen Hochskalierungen betrachtet wird.

In vorteilhafter Weise sind die oben genannten vorbestimmten magnetischen Flussdichten offsetbereinigte und störfeldfreie magnetische Flussdichten.

Vorzugsweise ist eine Summe aus dem Abstand zwischen dem ersten Magnetfeldsensor und dem zweiten Magnetfeldsensor in der Axialrichtung und dem Abstand zwischen dem zweiten Magnetfeldsensor und dem dritten Magnetfeldsensor in der Axialrichtung größer gleich 4 mm und kleiner als 20 mm. Mit anderen Worten ist ein Abstand zwischen dem ersten Magnetfeldsensor und dem dritten Magnetfeldsensor in der Axialrichtung vorzugsweise größer gleich 4 mm und kleiner als 20 mm. Somit kann der magnetoelastische Drehmomentsensor in der Axialrichtung kompakt ausgebildet sein. Dabei können die mindestens drei Magnetfeldsensoren insbesondere genau den ersten Magnetfeldsensor, den zweiten Magnetfeldsensor und den dritten Magnetfeldsensor umfassen.

Besonders bevorzugt umfassen die mindestens drei Magnetfeldsensoren den ersten Magnetfeldsensor, den zweiten Magnetfeldsensor, den dritten Magnetfeldsensor und einen vierten Magnetfeldsensor. Dabei ist der dritte Magnetfeldsensor in der Axialrichtung zwischen dem zweiten Magnetfeldsensor und dem vierten Magnetfeldsensor angeordnet. Die Auswerteeinheit ist eingerichtet, mindestens ein Messsignal des vierten Magnetfelssensors zu erfassen und zum Bestimmen des auf die Welle ausgeübten Drehmoments zusätzlich das mindestens eine Messsignal des vierten Magnetfeldsensors und ein Verhältnis eines Abstands zwischen dem zweiten Magnetfeldsensor und dem dritten Magnetfeldsensor in der Axialrichtung zu einem Abstand zwischen dem dritten Magnetfeldsensor und dem vierten Magnetfeldsensor in der Axialrichtung zu verwenden. Mit anderen Worten ist die Auswerteeinheit eingerichtet, mindestens ein Messsignal des vierten Magnetfelssensors zu erfassen und ein auf die Welle ausgeübtes Drehmoment mittels des mindestens einen Messsignals des ersten Magnetfeldsensors, des mindestens einen Messsignals des zweiten Magnetfeldsensors, des mindestens einen Messsignals des dritten Magnetfeldsensors, des mindestens einen Messsignals des vierten Magnetfeldsensors, des Verhältnisses des Abstands zwischen dem zweiten Magnetfeldsensor und dem dritten Magnetfeldsensor in der Axialrichtung zu dem Abstand zwischen dem ersten Magnetfeldsensor und dem zweiten Magnetfeldsensor in der Axialrichtung zu bestimmen und eines Verhältnisses eines Abstands zwischen dem zweiten Magnetfeldsensor und dem dritten Magnetfeldsensor in der Axialrichtung zu einem Abstand zwischen dem dritten Magnetfeldsensor und dem vierten Magnetfeldsensor in der Axialrichtung zu bestimmen. Durch die Berücksichtigung der Abstände der Magnetfeldsensoren relativ zueinander und entsprechende Gewichtung bzw. Skalierung der Messsignale der Magnetfeldsensoren können die Messsignale so miteinander kombiniert werden, dass bei der Berechnung des Drehmoments homogene Störfelder und lineare Störfeldgradienten eliminiert und nicht lineare Störfeldgradienten eliminiert oder minimiert werden, auch bei einem Einsatz in orts- und umgebungsveränderlichen Anwendungen in denen nicht ein stets gleich ausgebildeter nichtlinearer Störfeldgradient im Umfeld der Welle bzw. des magnetoelastischen Drehmomentsensors garantiert werden kann.

Insbesondere ist das Messsignal des vierten Magnetfeldsensors ein offsetbereinigtes Messsignal. Die Offsetbereinigung erfolgt in vorteilhafter Weise in einem drehmomentfreien und störfeldfreien Zustand.

Die mindestens eine Messachse des vierten Magnetfeldsensors umfasst vorzugsweise eine in der Axialrichtung oder der Radialrichtung der Welle parallele Messachse, wobei das mindestens eine Messsignal des vierten Magnetfeldsensors ein viertes Messsignal umfasst, welches einer Komponente der magnetischen Flussdichte des Magnetfeldes in der Axialrichtung oder der Radialrichtung der Welle an der Position des vierten Magnetfeldsensors entspricht.

Nach einer alternativen Ausgestaltung der Erfindung umfasst die mindestens eine Messachse des vierten Magnetfeldsensors zwei oder drei orthogonal zueinander ausgerichtete Messachsen umfasst, wobei das mindestens eine Messsignal des vierten Magnetfeldsensors zwei oder drei Messsignale, aus denen eine Komponente der magnetischen Flussdichte des Magnetfeldes in der Axialrichtung oder der Radialrichtung der Welle an der Position des vierten Magnetfeldsensors bestimmbar ist. Die Komponente der magnetischen Flussdichte des Magnetfeldes in der Axialrichtung oder der Radialrichtung der Welle an der Position des vierten Magnetfeldsensors kann vorzugsweise mittels der Auswerteinheit bestimmt werden.

Vorzugsweise ist die Auswerteeinheit eingerichtet, das auf die Welle ausgeübte Drehmoment mittels der Formel:

$$M = \left[ (B_{SE2} - B_{SE3}) - k \times \frac{d_{23}}{d_{12}} \times (B_{SE1} - B_{SE2}) - (1-k) \times \frac{d_{23}}{d_{34}} \dots \times (B_{SE3} - B_{SE4}) \right] \times s_{14} \qquad (6)$$

mit $0 \leq k \leq 1$
zu bestimmen. Dabei sind:

- M das zu bestimmende Drehmoment in "Nm",
- $B_{SE1}$ die Komponente der magnetischen Flussdichte des Magnetfeldes in der Axialrichtung bzw. in der Radialrichtung an der Position des ersten Magnetfeldsensors in "$\mu T$",
- $B_{SE2}$ die Komponente der magnetischen Flussdichte des Magnetfeldes in der Axialrichtung bzw. in der Radialrichtung an der Position des zweiten Magnetfeldsensors in "$\mu T$",
- $B_{SE3}$ die Komponente der magnetischen Flussdichte des Magnetfeldes in der Axialrichtung bzw. in der Radialrichtung an der Position des dritten Magnetfeldsensors in "$\mu T$",
- $B_{SE4}$ das vierte Messsignal in "$\mu T$",
- $d_{12}$ der Abstand zwischen dem ersten Magnetfeldsensor und dem zweiten Magnetfeldsensor in "mm",
- $d_{23}$ der Abstand zwischen dem zweiten Magnetfeldsensor und dem dritten Magnetfeldsensor in "mm",
- $d_{34}$ der Abstand zwischen dem dritten Magnetfeldsensor und dem vierten Magnetfeldsensor in "mm",

- $s_{14}$ die Sensitivität des magnetoelastischen Drehmomentsensors in "Nm/μT", und
- k ein Gewichtsfaktor, durch den die Kompensationseigenschaften für einen anwendungsspezifischen nichtlinearen Störfeldanteil optimiert werden können (vollständige Eliminierung) oder allgemein der Worst-Case-Fehler durch nichtlineare Störfeldanteile minimiert werden kann.

Durch die Formel (6) und durch die darin enthaltene Differenzbildung können bei der Berechnung des Drehmoments Störfeldanteile aufgrund homogener Störfelder und überlagerter linearer Störfeldgradienten eliminiert werden, und zwar unabhängig vom gewählten Wert für den Gewichtsfaktor k, solange 0≤k≤1.Die Fehler durch nichtlineare Störfeldgradienten können in Abhängigkeit vom gewählten k eliminiert oder minimiert werden. Somit kann anhand der Messsignale des ersten Magnetfeldsensors, des zweiten Magnetfeldsensors, des dritten Magnetfeldsensors und des vierten Magnetfeldsensors eine noch genauere Bestimmung des Drehmoments auch im Falle eines nicht linearen Störfeldgradienten im Umfeld des magnetoelastischen Drehmomentsensors ermöglicht werden.

In vorteilhafter Weise wird die Sensitivität des magnetoelastischen Drehmomentsensors mittels Zweipunkt-Kalibrierung frei von Störfeldern und nach Offsetbereinigung ermittelt. Insbesondere wird die Sensitivität gemäß der folgenden Formel ermittelt:

$$s_{14} = (M_2 - M_1)/\dots$$

$$\dots \left( \left[ \left( B_{SE2}(M_2) - B_{SE3}(M_2)\right) - k\frac{d_{23}}{d_{12}} \times \left( B_{SE1}(M_2) - B_{SE2}(M_2)\right) \dots - (1-k)\frac{d_{23}}{d_{34}} \right.\right.$$
$$\left. \times \left( B_{SE3}(M_2) - B_{SE4}(M_2)\right)\right] - \dots$$

$$\dots \left[ \left( B_{SE2}(M_1) - B_{SE3}(M_1)\right) - k\frac{d_{23}}{d_{12}} \times \left( B_{SE1}(M_1) - B_{SE2}(M_1)\right) \dots - (1-k)\frac{d_{23}}{d_{34}} \right.$$
$$\left.\left. \times \left( B_{SE3}(M_1) - B_{SE4}(M_1)\right)\right]\right) \qquad (7)$$

Dabei sind:

- $M_1$ das Drehmoment in "Nm" beim ersten Punkt der Zweipunkt-Kalibrierung,
- $M_2$ das Drehmoment "Nm" beim zweiten Punkt der Zweipunkt-Kalibrierung,
- $B_{SEa}(M_b)$ das gemessene Messsignal des Magnetsensors "a" in "μT" beim Punkt "b" der Zweipunkt-Kalibrierung

    mit a=1 für den ersten Magnetfeldsensor, a=2 für den zweiten Magnetfeldsensor, a=3 für den dritten Magnetfeldsensor, und a=4 für den vierten Magnetfeldsensor, und
    b=1 für den ersten Punkt und b=2 den zweiten Punkt der Zweipunkt-Kalibrierung,

- $d_{12}$ der Abstand zwischen dem ersten Magnetfeldsensor und dem zweiten Magnetfeldsensor in "mm",
- $d_{23}$ der Abstand zwischen dem zweiten Magnetfeldsensor und dem dritten Magnetfeldsensor in "mm",
- $d_{34}$ der Abstand zwischen dem dritten Magnetfeldsensor und dem vierten Magnetfeldsensor in "mm", und
- k der zuvor mit Bezug auf die Formel (6) beschriebene Gewichtsfaktor.

Vorzugsweise sind der erste Magnetfeldsensor, der zweite Magnetfeldsensor, der dritte Magnetfeldsensor und der vierte Magnetfeldsensor relativ zueinander und relativ zum mindestens einen magnetisierten Bereich derart angeordnet, dass die folgende Bedingung erfüllt ist:

$$\left| (N_{SE2} - N_{SE3}) - k \times \frac{d_{23}}{d_{12}} \times (N_{SE1} - N_{SE2}) - (1-k) \times \frac{d_{23}}{d_{34}} \dots \times (N_{SE3} - N_{SE4}) \right| > 0 \text{ μT} \qquad (8)$$

mit 0≤k≤1.

Insbesondere sind der erste Magnetfeldsensor, der zweite Magnetfeldsensor, der dritte Magnetfeldsensor und der vierte Magnetfeldsensor relativ zueinander und relativ zum mindestens einen magnetisierten Bereich derart angeordnet, dass die folgende Bedingung erfüllt ist:

$$\left|(N_{SE2} - N_{SE3}) - k \times \frac{d_{23}}{d_{12}} \times (N_{SE1} - N_{SE2}) - (1 - k) \times \frac{d_{23}}{d_{34}} \dots \times (N_{SE3} - N_{SE4})\right| > 50 \ \mu T \qquad (9)$$

mit $0 \le k \le 1$.

Dabei sind:

- $N_{SE1}$ eine vorbestimmte Komponente der magnetischen Flussdichte in "$\mu$T" eines durch den mindestens einen magnetisierten Bereich erzeugten Magnetfeldes an einer Position des ersten Magnetfeldsensors aufgrund einer Beanspruchung der Welle mit einem maximalen, durch den magnetoelastischen Drehmomentsensor messbaren Drehmoment,
- $N_{SE2}$ eine vorbestimmte Komponente der magnetischen Flussdichte in "$\mu$T" eines durch den mindestens einen magnetisierten Bereich erzeugten Magnetfeldes an einer Position des zweiten Magnetfeldsensors aufgrund einer Beanspruchung der Welle mit dem maximalen, durch den magnetoelastischen Drehmomentsensor messbaren Drehmoment,
- $N_{SE3}$ eine vorbestimmte Komponente der magnetischen Flussdichte in "$\mu$T" eines durch den mindestens einen magnetisierten Bereich erzeugten Magnetfeldes an einer Position des dritten Magnetfeldsensors aufgrund einer Beanspruchung der Welle mit einem maximalen, durch den magnetoelastischen Drehmomentsensor messbaren Drehmoment,
- $N_{SE4}$ eine vorbestimmte Komponente der magnetischen Flussdichte in "$\mu$T" eines durch den mindestens einen magnetisierten Bereich erzeugten Magnetfeldes an einer Position des vierten Magnetfeldsensors aufgrund einer Beanspruchung der Welle mit einem maximalen, durch den magnetoelastischen Drehmomentsensor messbaren Drehmoment,
- $d_{12}$ der Abstand zwischen dem ersten Magnetfeldsensor und dem zweiten Magnetfeldsensor in "mm",
- $d_{23}$ der Abstand zwischen dem zweiten Magnetfeldsensor und dem dritten Magnetfeldsensor in "mm",
- $d_{34}$ der Abstand zwischen dem dritten Magnetfeldsensor und dem vierten Magnetfeldsensor in "mm", und
- k der zuvor mit Bezug auf die Formel (6) beschriebene Gewichtsfaktor.

Insbesondere sind die oben genannten vorbestimmten magnetische Flussdichten offsetbereinigte und störfeldfreie magnetische Flussdichten.

Vorzugsweise ist eine Summe aus dem Abstand zwischen dem ersten Magnetfeldsensor und dem zweiten Magnetfeldsensor in der Axialrichtung, dem Abstand zwischen dem zweiten Magnetfeldsensor und dem dritten Magnetfeldsensor in der Axialrichtung und dem Abstand zwischen dem dritten Magnetfeldsensor und dem vierten Magnetfeldsensor größer gleich 6 mm und kleiner als 20 mm. Mit anderen Worten ist ein Abstand zwischen dem ersten Magnetfeldsensor und dem vierten Magnetfeldsensor in der Axialrichtung vorzugsweise größer gleich 6 mm und kleiner als 20 mm. Somit ist der magnetoelastische Drehmomentsensor in der Axialrichtung kompakt ausgebildet. Dabei können die mindestens drei Magnetfeldsensoren insbesondere genau den ersten Magnetfeldsensor, den zweiten Magnetfeldsensor, den dritten Magnetfeldsensor und den vierten Magnetfeldsensor umfassen.

Nach einer vorteilhaften Ausgestaltung der Erfindung weist die Welle nur einen magnetisierten Bereich auf, dem die mindestens drei Magnetfeldsensoren zugeordnet sind. Insbesondere sind der erste Magnetfeldsensor, der zweite Magnetfeldsensor und der dritte Magnetfeldsensor oder der erste Magnetfeldsensor, der zweite Magnetfeldsensor, der dritte Magnetfeldsensor und der vierte Magnetfeldsensor dem einen magnetisierten Bereich zugeordnet.

Nach einer alternativen vorteilhaften Ausgestaltung der Erfindung weist die Welle nur einen ersten magnetisierten Bereich und einen zweiten magnetisierten Bereich auf, wobei der erste magnetisierte Bereich und der zweite magnetisierte Bereich entgegengesetzte Magnetisierungen aufweisen. Anders gesagt ist die Welle vorzugsweise nur mit zwei magnetisierten Bereichen versehen, die entgegengesetzte Magnetisierungen aufweisen. Der erste magnetisierte Bereich und der zweite magnetisierte Bereich können betragsmäßig die gleiche Magnetisierung haben. Es ist allerdings möglich, dass die Beträge der Magnetisierungen des ersten magnetisierten Bereichs und des zweiten magnetisierten Bereichs unterschiedlich sind.

Vorzugsweise sind der erste Magnetfeldsensor und der zweite Magnetfeldsensor dem ersten magnetisierten Bereich und der dritte Magnetfeldsensor dem zweiten magnetisierten Bereich zugeordnet. Alternativ können vorzugsweise der erste Magnetfeldsensor und der zweite Magnetfeldsensor dem ersten magnetisierten Bereich und der dritte Magnetfeldsensor und der vierte Magnetfeldsensor dem zweiten magnetisierten Bereich zugeordnet sein.

Die Formulierung, dass ein Magnetfeldsensor einem magnetisierten Bereich zugeordnet ist, bedeutet insbesondere, dass der Magnetfeldsensor eingerichtet ist, eine oder mehrere Komponenten der magnetischen Flussdichte eines Magnetfeldes, welches bei einer Drehmomentbeanspruchung der Welle durch diesen magnetisierten Bereich erzeugbar ist, zu erfassen.

Der erste Magnetfeldsensor und/oder der zweite Magnetfeldsensor und/oder der dritte Magnetfeldsensor und/oder der vierte Magnetfeldsensor kann/können jeweils beispielsweise als Hall-Sensor, AMR-Sensor (Sensor auf Basis des AMR-Effektes; anisotroper magnetoresistiver Effekt), GMR-Sensor (Sensor auf Basis des GMR-Effektes; Riesenmagnetowiderstands-Sensor), Fluxgate-Magnetometer oder TMR-Sensor (Tunnel-Magnetoresistiv-Sensor) ausgebildet sein.

Es sei angemerkt, dass im Rahmen der Erfindung ein Abstand zwischen einem Magnetfeldsensor und einem anderen Magnetfeldsensor in vorteilhafter Weise als der Abstand zwischen einem Punkt, insbesondere der Sensormitte, des einen Magnetfeldsensors und dem entsprechenden Punkt, insbesondere der Sensormitte, des anderen Magnetfeldsensors definiert ist.

Im Rahmen der Erfindung kann der Begriff "magnetisierter Bereich" insbesondere auch als "magnetisierte Spur" oder "magnetisierte Bahn" bezeichnet werden.

Die vorliegende Erfindung bezieht sich ferner auf ein Fahrzeug mit einem zuvor beschriebenen magnetoelastischen Drehmomentsensor.

Das Fahrzeug kann insbesondere elektrisch und/oder mit Muskelkraft betreibbar sein und einen Kurbeltrieb aufweisen. Dabei ist der magnetoelastische Drehmomentsensor in vorteilhafter Weise am Kurbeltrieb angeordnet und insbesondere eingerichtet, ein von einem Fahrer über seine Muskelkraft auf den Kurbeltrieb aufgebrachtes Drehmoment zu erfassen.

Des Weiteren betrifft die vorliegende Erfindung ein Verfahren zum Bestimmen eines Drehmoments unter Verwendung eines zuvor beschriebenen magnetoelastischen Drehmomentsensors. Das Verfahren umfasst die Schritte des Erfassens mindestens eines Messsignals des ersten Magnetfeldsensors, des Erfassens mindestens eines Messsignals des zweiten Magnetfeldsensors, des Erfassens mindestens eines Messsignals des dritten Magnetfeldsensors und des Bestimmens eines auf die Welle ausgeübten Drehmoments mittels des mindestens einen Messsignals des ersten Magnetfeldsensors, des mindestens einen Messsignals des zweiten Magnetfeldsensors, des mindestens einen Messsignals des dritten Magnetfeldsensors und eines Verhältnisses eines Abstands zwischen dem zweiten Magnetfeldsensor und dem dritten Magnetfeldsensor in der Axialrichtung zu einem Abstand zwischen dem ersten Magnetfeldsensor und dem zweiten Magnetfeldsensor in der Axialrichtung. Hierbei sind die mit Bezug auf den zuvor beschriebenen magnetoelastischen Drehmomentsensor ausgeführten Vorteile auch hier gegeben.

Mit anderen Worten betrifft die Erfindung ein Verfahren zum Bestimmen eines Drehmoments, welches die Schritte des Erfassens mindestens eines Messsignals eines ersten Magnetfeldsensors, des Erfassens mindestens eines Messsignals eines zweiten Magnetfeldsensors und des Erfassens mindestens eines Messsignals eines dritten Magnetfeldsensors umfasst, wobei der zweite Magnetfeldsensor in der Axialrichtung zwischen dem ersten Magnetfeldsensor und dem dritten Magnetfeldsensor angeordnet ist und die Magnetfeldsensoren jeweils mindestens eine Messachse aufweisen und eingerichtet sind, eine Komponente einer magnetischen Flussdichte eines Magnetfeldes in Richtung der mindestens einen Messachse zu erfassen. Mindestens einer der Magnetfeldsensoren ist relativ zu mindestens einem magnetisierten Bereich einer Welle derart angeordnet, dass der Magnetfeldsensor eingerichtet ist, eine Komponente einer magnetischen Flussdichte eines Magnetfeldes in Richtung der jeweiligen mindestens einen Messachse zu erfassen, welches bei einer Drehmomentbeanspruchung der Welle durch den magnetisierten Bereich erzeugbar ist. Ferner umfasst das Verfahren den Schritt des Bestimmens eines auf die Welle ausgeübten Drehmoments mittels des mindestens einen Messsignals des ersten Magnetfeldsensors, des mindestens einen Messsignals des zweiten Magnetfeldsensors, des mindestens einen Messsignals des dritten Magnetfeldsensors und eines Verhältnisses eines Abstands zwischen dem zweiten Magnetfeldsensor und dem dritten Magnetfeldsensor in der Axialrichtung zu einem Abstand zwischen dem ersten Magnetfeldsensor und dem zweiten Magnetfeldsensor in der Axialrichtung.

Es sei angemerkt, dass die oben erläuterten Merkmale des magnetoelastischen Drehmomentsensors auch als Verfahrensmerkmale formuliert werden können.

Die Auswerteeinheit und die Magnetfeldsensoren können je nach Magnetfeldsensorart in vorteilhafter Weise informationstechnisch/digital oder analog miteinander verbunden sein. Mit anderen Worten kann eine Schnittstelle zwischen der Auswerteeinheit und den Magnetfeldsensoren je nach Magnetfeldsensorart digital oder analog ausgeführt sein.

Kurze Beschreibung der Zeichnung(en)

Nachfolgend werden Ausführungsbeispiele der Erfindung unter Bezugnahme auf die begleitende Zeichnung im Detail beschrieben, wobei gleiche bzw. funktional gleiche Bauteile jeweils mit dem gleichen Bezugszeichen versehen sind. In der Zeichnung ist:

Figur 1     eine vereinfachte schematische Ansicht eines magnetoelastischen Drehmomentsensors gemäß einem ersten Ausführungsbeispiel der vorliegenden Erfindung,

Figur 2      eine vereinfachte schematische Ansicht einer Welle des magnetoelastischen Drehmomentsensors aus Figur 1 ohne Drehmomentbelastung der Welle,

Figur 3      eine vereinfachte schematische Ansicht der Welle des magnetoelastischen Drehmomentsensors aus Figur 2 bei einer Drehmomentbelastung der Welle,

Figur 4      ein Diagramm zur Darstellung eines Beispiels eines Magnetstörfeldes im Umfeld des magnetoelastischen Drehmomentsensors,

Figur 5      ein Diagramm einer Verteilung einer axialen Komponente eines Magnetfeldes entlang der Welle eines beispielhaften magnetoelastischen Drehmomentsensors gemäß dem ersten Ausführungsbeispiel, welches bei einer Drehmomentbelastung der Welle erzeugbar und durch die Magnetfeldsensoren des Drehmomentsensors erfassbar ist,

Figur 6      ein Elektrofahrrad mit einem magnetoelastischen Drehmomentsensor gemäß dem ersten Ausführungsbeispiel,

Figur 7      eine vereinfachte schematische Ansicht eines magnetoelastischen Drehmomentsensors gemäß einem zweiten Ausführungsbeispiel der vorliegenden Erfindung,

Figur 8      eine vereinfachte schematische Ansicht einer Welle des magnetoelastischen Drehmomentsensors aus Figur 7 ohne Drehmomentbelastung der Welle,

Figur 9      ein Diagramm einer Verteilung einer axialen Komponente eines Magnetfeldes entlang der Welle eines ersten beispielhaften magnetoelastischen Drehmomentsensors gemäß dem zweiten Ausführungsbeispiel, welches bei einer Drehmomentbelastung der Welle erzeugbar und durch die Magnetfeldsensoren des Drehmomentsensors erfassbar ist,

Figur 10      ein Diagramm einer Verteilung einer axialen Komponente eines Magnetfeldes entlang der Welle eines zweiten beispielhaften magnetoelastischen Drehmomentsensors gemäß dem zweiten Ausführungsbeispiel, welches bei einer Drehmomentbelastung der Welle erzeugbar und durch die Magnetfeldsensoren des Drehmomentsensors erfassbar ist,

Figur 11      ein Diagramm einer Verteilung einer axialen Komponente eines Magnetfeldes entlang der Welle eines dritten beispielhaften magnetoelastischen Drehmomentsensors gemäß dem zweiten Ausführungsbeispiel, welches bei einer Drehmomentbelastung der Welle erzeugbar und durch die Magnetfeldsensoren des Drehmomentsensors erfassbar ist,

Figur 12      eine vereinfachte schematische Ansicht eines magnetoelastischen Drehmomentsensors gemäß einem dritten Ausführungsbeispiel der vorliegenden Erfindung, und

Figur 13      eine vereinfachte schematische Ansicht eines magnetoelastischen Drehmomentsensors gemäß einem vierten Ausführungsbeispiel der vorliegenden Erfindung.

Ausführungsformen der Erfindung

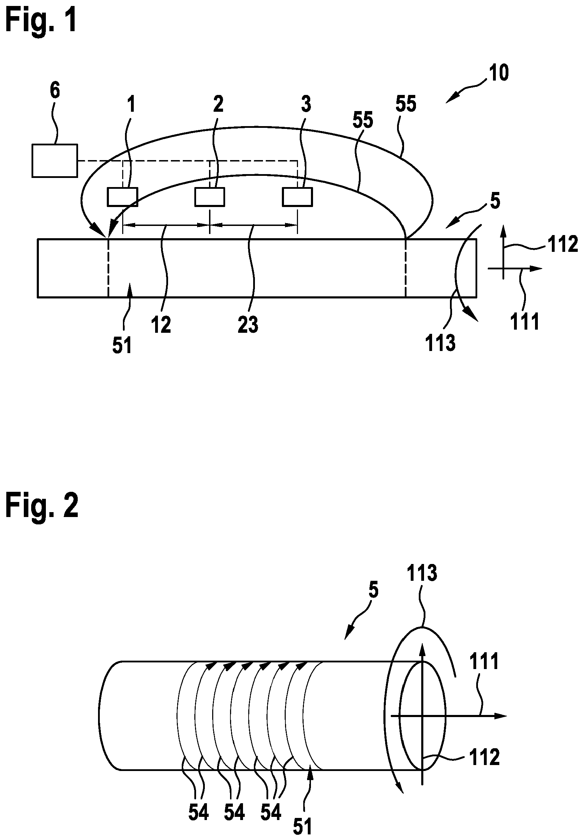

Nachfolgend wird unter Bezugnahme auf die Figuren 1 bis 5 ein magnetoelastischer Drehmomentsensor 10 gemäß einem ersten Ausführungsbeispiel der vorliegenden Erfindung im Detail beschrieben.

Wie aus Figur 1 ersichtlich ist, umfasst der magnetoelastische Drehmomentsensor 10 eine magnetoelastische Welle 5, einen ersten Magnetfeldsensor 1, einen Magnetfeldsensor 2, einen dritten Magnetfeldsensor 3 und eine Auswerteeinheit 6.

In der Welle 5, die in vorteilhafter Weise kreiszylinderförmig ausgebildet ist, ist ein magnetisierter Bereich 51 gebildet. Der magnetisierte Bereich 51 entspricht einem Teil der Welle 5, der magnetisiert worden ist. Es ist allerdings auch möglich, dass der magnetisierte Bereich 51 durch eine zusätzliche, die Welle 5 umgebende magnetisierte Komponente, insbesondere durch einen magnetisierten Ring, bereitgestellt wird.

Es sei angemerkt, dass in diesem Ausführungsbeispiel die Welle 5 nur den magnetisierten Bereich 51 umfasst, wobei auch der magnetoelastische Drehmomentsensor 10 keine weiteren Magnetfeldsensoren außer dem ersten Magnetfeldsensor 1, dem zweiten Magnetfeldsensor 2 und dem dritten Magnetfeldsensor 3 umfasst.

Durch die Welle 5 ist eine Axialrichtung 111, eine Radialrichtung 112 und eine Umfangsrichtung 113 definiert. Die Welle 5 erstreckt sich in der Axialrichtung 111. Die Axialrichtung 111, die Radialrichtung 112 und die Umfangsrichtung 113 der Welle 5 können im Rahmen der Erfindung auch als eine Axialrichtung, eine Radialrichtung und eine Umfangsrichtung des magnetoelastischen Drehmomentsensors 10 bezeichnet werden.

Der erste Magnetfeldsensor 1, der zweite Magnetfeldsensor 2 und der dritte Magnetfeldsensor 3, die jeweils mindestens eine Messachse aufweisen und eingerichtet sind, eine Komponente der magnetischen Flussdichte eines Magnetfeldes in Richtung der mindestens einen Messachse zu erfassen, können in vorteilhafter Weise in der Radialrichtung 112 und der Umfangsrichtung 113 relativ zur Welle 5 an derselben Position angeordnet sein. In der Axialrichtung 111 sind der erste Magnetfeldsensor 1, der zweite Magnetfeldsensor 2 und der dritte Magnetfeldsensor 3 an unterschiedlichen Positionen relativ zur Welle 5 angeordnet.

Wie sich ferner aus Figur 1 ergibt, ist der zweite Magnetfeldsensor 2 zwischen dem ersten Magnetfeldsensor 1 und dem dritten Magnetfeldsensor 3 positioniert.

Insbesondere sind der erste Magnetfeldsensor 1 und der zweite Magnetfeldsensor 2 in der Axialrichtung 111 in einem Abstand 12 voneinander angeordnet. Ferner ist der dritte Magnetfeldsensor 3 in der Axialrichtung 111 in einem Abstand 23 vom zweiten Magnetfeldsensor 2 angeordnet.

Dabei ist eine Summe aus dem Abstand 12 zwischen dem ersten Magnetfeldsensor 1 und dem zweiten Magnetfeldsensor 2 in der Axialrichtung 111 und dem Abstand 23 zwischen dem zweiten Magnetfeldsensor 2 und dem dritten Magnetfeldsensor 3 in der Axialrichtung 111 größer gleich 4 mm und kleiner als 20 mm.

Der erste Magnetfeldsensor 1, der zweite Magnetfeldsensor 2 und der dritte Magnetfeldsensor 3 sind relativ zueinander und zum magnetisierten Bereich 51 der Welle 5 derart angeordnet, dass eine der folgenden beiden Bedingungen erfüllt ist:

$$\left| (N_{SE2} - N_{SE3}) - \frac{d_{23}}{d_{12}} \times (N_{SE1} - N_{SE2}) \right| > 50 \ \mu T$$

mit $\quad \dfrac{d_{23}}{d_{12}} \leq 1$

$$\left| (N_{SE1} - N_{SE2}) - \frac{d_{12}}{d_{23}} \times (N_{SE2} - N_{SE3}) \right| > 50 \ \mu T$$

mit $\quad \dfrac{d_{12}}{d_{23}} < 1$ .

Dabei sind:

- $N_{SE1}$ eine vorbestimmte Komponente der magnetischen Flussdichte in "$\mu T$" eines durch den magnetisierten Bereich 51 erzeugten Magnetfeldes an einer Position des ersten Magnetfeldsensors 1 aufgrund einer Beanspruchung der Welle 5 mit einem maximalen, durch den magnetoelastischen Drehmomentsensor 10 messbaren Drehmoment,
- $N_{SE2}$ eine vorbestimmte Komponente der magnetischen Flussdichte in "$\mu T$" eines durch den magnetisierten Bereich 51 erzeugten Magnetfeldes an einer Position des zweiten Magnetfeldsensors 2 aufgrund einer Beanspruchung der Welle 5 mit dem maximalen, durch den magnetoelastischen Drehmomentsensor 10 messbaren Drehmoment, und
- $N_{SE3}$ eine vorbestimmte Komponente der magnetischen Flussdichte in "$\mu T$" eines durch den magnetisierten Bereich 51 erzeugten Magnetfeldes 5 an einer Position des dritten Magnetfeldsensors 3 aufgrund einer Beanspruchung der Welle 5 mit einem maximalen, durch den magnetoelastischen Drehmomentsensor 10 messbaren Drehmoment.

In vorteilhafter Weise sind die oben genannten vorbestimmten magnetischen Flussdichten offsetbereinigte und störfeldfreie magnetische Flussdichten.

Insbesondere sind die drei Magnetfeldsensoren 1, 2, 3 dem magnetisierten Bereich 51 zugeordnet. Mit anderen Worten sind die drei Magnetfeldsensoren 1, 2, 3 relativ zum magnetisierten Bereich 51 derart angeordnet, dass die Magnetfeldsensoren 1, 2, 3 jeweils eingerichtet sind, eine Komponente der magnetischen Flussdichte eines Magnetfeldes, welches bei einer Drehmomentbeanspruchung der Welle 5 durch den magnetisierten Bereich 51 erzeugbar ist, in der Axialrichtung 111 zu erfassen.

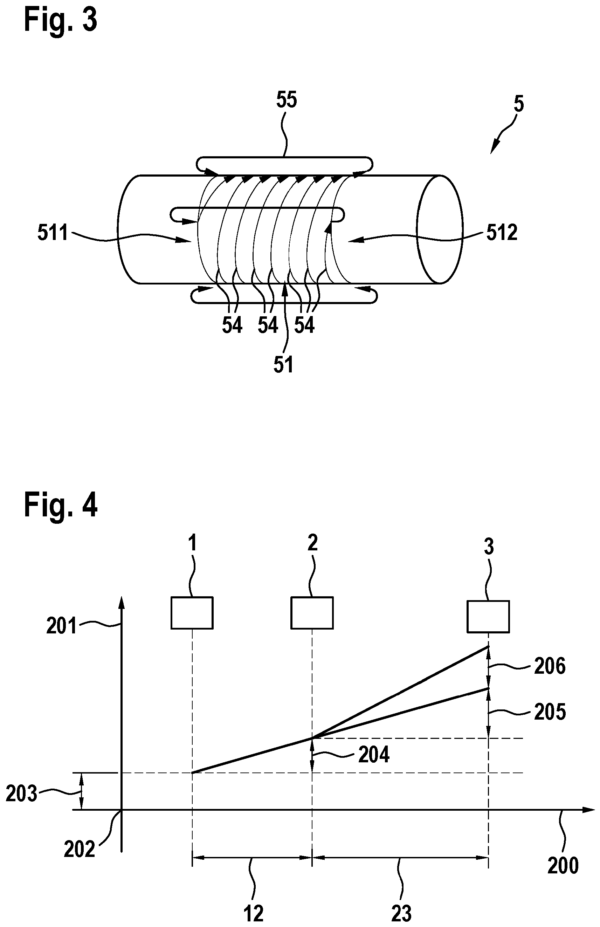

Wie ein Magnetfeld bei einer Drehmomentbelastung der Welle 5 entsteht, wird im Folgenden anhand der Figuren 2 und 3 erklärt.

In Figur 2 ist die Welle 5 des magnetoelastischen Drehmomentsensors 10 ohne Drehmomentbelastung dargestellt. Wie dieser Figur zu entnehmen ist, hat der magnetisierte Bereich 51 der Welle 5 geschlossene Feldlinien 54, die in der Welle 51 in der Umfangsrichtung 113 verlaufen.

Auf der anderen Seite ist in Figur 3 die Welle 5 in einem durch ein Drehmoment belasteten Zustand dargestellt. Das auf die Welle 5 bzw. den magnetisierten Bereich 51 ausgeübte Drehmoment führt zu mechanischem Stress in der Welle 5. Durch die magnetoelastische Wechselwirkung, die im magnetisierten Bereich 51 der Welle 5 auftritt, werden die Feldlinien 54 in die Stressrichtung gedreht. Dadurch verlaufen die Feldlinien 54 schraubenförmig um die Welle 5 herum. Das Ergebnis ist, dass die an einem Ende 512 des magnetisierten Bereiches 51 ankommenden Feldlinien 54 die Welle 5 verlassen und auf einen Anfang 511 des magnetisierten Bereiches 51 zurückgehen. Dadurch entsteht im Bereich außerhalb der Welle 5 ein Magnetfeld, das immer der Welle 5 entlang orientiert ist. Dieses Magnetfeld wird als Nutzfeld bezeichnet. Exakt in der Mitte des magnetisierten Bereiches 51 ist das Nutzfeld parallel zur Welle 5, wohingegen in den Randbereichen des magnetisierten Bereiches 51 der Anteil des Nutzfeldes senkrecht aus der Welle 5 heraus immer größer wird. Das Nutzfeld, welches in den Figuren 1 und 3 mittels den Feldlinien 55 dargestellt ist, bzw. die magnetische Flussdichte des Nutzfeldes außerhalb der Welle 5 ist an jeder Stelle proportional zum auf die Welle 5 ausgeübten Drehmoment.

Die magnetische Flussdichte des Nutzfeldes außerhalb der Welle 5 kann durch die Magnetfeldsensoren 1, 2, 3 erfasst werden, die jeweils eingerichtet sind, ein Messsignal auszugeben. Wenn im Umfeld der Welle 5 bzw. des drehmomentelastischen Magnetsensors 10 ein Magnetstörfeld vorliegt, umfasst bei einer Drehmomentbelastung der Welle 5 das Messsignal jedes Magnetfeldsensors 1, 2, 3 nicht nur die entsprechende magnetische Flussdichte des erzeugten Nutzfeldes, sondern auch die magnetische Flussdichte des überlagerten Magnetstörfeldes an der Position des jeweiligen Magnetfeldsensors 1, 2, 3.

Insbesondere ist die Auswerteeinheit 6 eingerichtet, ein erstes Messsignal des ersten Magnetfeldsensors 1, ein zweites Messsignal des zweiten Magnetfeldsensors 2 und ein drittes Messsignal des dritten Magnetfeldsensors 3 zu erfassen. Dazu ist die Auswerteeinheit 6 mit den drei Magnetfeldsensoren 1, 2 und 3 insbesondere informationstechnisch verbunden.

Insbesondere sind das erste Messsignal, das zweite Messsignal und das dritte Messsignal offsetbereinigte Messsignale. Die Offsetbereinigung erfolgt in vorteilhafter Weise in einem drehmomentfreien und störfeldfreien Zustand.

Zum Bestimmen des auf die Welle 5 ausgeübten Drehmoments ist die Auswerteeinheit 6 eingerichtet, das erste Messsignal, das zweite Messsignal, das dritte Messsignal, ein Verhältnis des Abstands 23 zwischen dem zweiten Magnetfeldsensor 23 und dem dritten Magnetfeldsensor 3 in der Axialrichtung 111 zum Abstand 12 zwischen dem ersten Magnetfeldsensor 1 und dem zweiten Magnetfeldsensor 2 in der Axialrichtung 111 und eine Sensitivität des magnetoelastischen Drehmomentsensors 10 zu verwenden.

Dabei entspricht das erste Messsignal der Komponente der magnetischen Flussdichte des Magnetfeldes in der Axialrichtung an der Position des ersten Magnetfeldsensors, das zweite Messsignal der Komponente der magnetischen Flussdichte des Magnetfeldes in der Axialrichtung an der Position des zweiten Magnetfeldsensors und das dritte Messsignal der Komponente der magnetischen Flussdichte des Magnetfeldes in der Axialrichtung an der Position des dritten Magnetfeldsensors.

Insbesondere ist die Auswerteeinheit 6 eingerichtet, ein auf die Welle 5 ausgeübtes Drehmoment mittels der Formel

$$M = \left[ (B_{SE2} - B_{SE3}) - \frac{d_{23}}{d_{12}} \times (B_{SE1} - B_{SE2}) \right] \times s_{13}$$

zu bestimmen. Dabei sind:

- M das zu bestimmende Drehmoment in "Nm",
- $B_{SE1}$ die Komponente der magnetischen Flussdichte des Magnetfeldes in der Axialrichtung an der Position des ersten Magnetfeldsensors in "$\mu$T",
- $B_{SE2}$ die Komponente der magnetischen Flussdichte des Magnetfeldes in der Axialrichtung an der Position des zweiten Magnetfeldsensors in "$\mu$T",
- $B_{SE3}$ die Komponente der magnetischen Flussdichte des Magnetfeldes in der Axialrichtung an der Position des dritten Magnetfeldsensors in "$\mu$T",
- $d_{12}$ der Abstand 12 zwischen dem ersten Magnetfeldsensor 1 und dem zweiten Magnetfeldsensor 2 in "mm",
- $d_{23}$ der Abstand 23 zwischen dem zweiten Magnetfeldsensor 2 und dem dritten Magnetfeldsensor 3 in "mm",
- und $s_{13}$ die Sensitivität des magnetoelastischen Drehmomentsensors 10 in "Nm/$\mu$T".

Durch die vorgeschlagene Anordnung der Magnetfeldsensoren 1, 2, 3 und die vorgeschlagene Berechnung eines auf die Welle 5 des magnetoelastischen Drehmomentsensors 10 ausgeübten Drehmoments können bei der Berechnung homogene Störfelder und lineare Störfeldgradienten in der Axialrichtung 111 direkt und näherungsfrei eliminiert werden. Darüber hinaus können diese direkt eliminierten Störfelder zudem näherungsfrei berechnet werden und für mögliche Überwachungsfunktionen zur Verfügung stehen. Die Berechnung der eliminierten Störfelder wird später mit Bezugnahme auf Figur 4 näher erläutert.

Ein geringer, in der Regel vernachlässigbarer, Fehler bei der Berechnung des Drehmoments kann z.B. noch durch nichtlineare Gradienten entstehen, da für die zuvor angegebene Berechnungsformel die Annahme getroffen wird, dass die nichtlinearen Störfeldanteile null sind. Die nichtlinearen Anteile sind betragsmäßig jedoch im Vergleich zu den homogenen Störfeldern und den linearen Störfeldgradienten, die im Umfeld des magnetoelastischen Drehmomentsensors 10 üblicherweise existieren, vernachlässigbar.

Um diesen geringen Fehler, im Fall eines im Umfeld der Welle 5 des magnetoelastischen Drehmomentsensors 10 vorliegenden nichtlinearen Störfeldanteils, bei der Berechnung eines auf die Welle 5 ausgeübten Drehmoments unter Verwendung der Messsignale von nur drei Magnetfeldsensoren, nämlich der Magnetfeldsensoren 1, 2, 3, weiter zu reduzieren, kann die Auswerteeinheit 6 weiterhin eingerichtet sein, das auf die Welle 5 ausgeübte Drehmoment mittels der Formel

$$M=\left[\left(B_{SE2} - B_{SE3}\right) - k\times\frac{d_{23}}{d_{12}}\times\left(B_{SE1} - B_{SE2}\right)\right] \times s_{13}$$

mit $0{,}9 \leq k < 1$ *oder* $1 < k \leq 1{,}1$
zu bestimmen.

Der Unterschied zwischen den beiden Formeln besteht in der Benutzung eines vorbestimmten Gewichtsfaktors k bei der zweiten Formel. Durch die Einführung dieses Gewichtsfaktors in die Drehmomentberechnung kann im Falle eines vorhandenen nichtlinearen Störfeldanteils in der Axialrichtung 111 im Umfeld der Welle 5 bzw. des magnetoelastischen Drehmomentsensors 10 ein durch den nichtlinearen Störfeldanteil verursachter Fehler beim Bestimmen des Drehmoments reduziert werden

Mit anderen Worten kann durch den vorbestimmen Gewichtsfaktor k, bei einem in einer Zielanwendung stets gleich ausgebildeten nichtlinearen Störfeldgradienten im Bereich des magnetoelastischen Drehmomentsensors 10, der geringe Fehler weiter reduziert werden, der unter Verwendung der ersten Formel entstehen würde, wohingegen in orts- und umgebungsveränderlichen Anwendungen, in denen die Annahme eines stets gleich ausgebildeten nichtlinearen Störfeldgradienten unzutreffend ist da veränderliche Ausbildungen des Störfeldgradienten auftreten können, der verursachte Fehler bei der Drehmomentberechnung gegenüber der ersten Formel größer ausfallen kann, sodass die erste Formel ohne den vorbestimmten Gewichtsfaktor k in einer solchen Anwendung die bevorzugte Wahl darstellt um den größtmöglichen Fehler zu minimieren.

Die Sensitivität des magnetoelastischen Drehmomentsensors 10 kann mittels Zweipunkt-Kalibrierung frei von Störfeldern und nach Offsetbereinigung ermittelt werden. Insbesondere wird die Sensitivität gemäß Formel 3a beziehungsweise Formel 3b aus dem allgemeinen Teil der Beschreibung bestimmt.

Der erste Magnetfeldsensor 1 und/oder der zweite Magnetfeldsensor 2 und/oder der dritte Magnetfeldsensor 3 kann/können jeweils beispielsweise als Hall-Sensor, AMR-Sensor (Sensor auf Basis des AMR-Effektes; anisotroper magnetoresistiver Effekt), GMR-Sensor (Sensor auf Basis des GMR-Effektes; Riesenmagnetowiderstands-Sensor), Fluxgate-Magnetometer oder TMR-Sensor (Tunnel-Magnetoresistiv-Sensor) ausgebildet sein.

Figur 4 zeigt ein Diagramm zur Darstellung eines Beispiels eines Magnetstörfeldes im Umfeld des magnetoelastischen Drehmomentsensors 10.

Die x-Achse 200 bezeichnet den Abstand entlang der Welle 5 in der Axialrichtung 111 in "mm", gemessen von einem Ursprung 202, wobei die y-Achse 201 die Komponente der magnetischen Flussdichte des Störfeldes in der Axialrichtung (111) in "$\mu$T" bezeichnet. Der Nullwert des Ursprungs 202 in der x-Achse 200 entspricht einem Anfang der Welle 5.

Aus Figur 4 wird ersichtlich, dass zwischen dem ersten Magnetfeldsensor 1 und dem dritten Magnetfeldsensor 3 das Magnetstörfeld einen homogenen Anteil 203 aufweist, der bezüglich Magnetfeldsensor 1 definiert ist. Das heißt, dass an den Positionen des ersten Magnetfeldsensors 1, des zweiten Magnetfeldsensors 2 und des dritten Magnetfeldsensors 3 in der Axialrichtung 111 dieser homogene Anteil 203 vorliegt.

Durch die Festlegung des Bezugs des homogenen Anteils 203 auf den ersten Magnetfeldsensor 1, liegt an der Position des ersten Magnetfeldsensors 1 nur der homogene Anteil 203 vor. Zwischen dem ersten Magnetfeldsensor 1 und dem dritten Magnetfeldsensor 3 liegt ferner ein linearer Störfeldgradient vor, so dass an der Position des zweiten Magnetfeldsensors 2 in der Axialrichtung 111 der homogene Anteil 203 und ein linearer Anteil 204 und an der Position des dritten Magnetfeldsensors 3 in der Axialrichtung 111 der homogene Anteil 203, der lineare Anteil 204 und ein weiterer linearer Anteil 205 vorliegen.

Wie sich ferner aus Figur 4 ergibt, ist zwischen dem zweiten Magnetfeldsensor 2 und dem dritten Magnetfeldsensor 3 ein weiterer Anteil 206 eines Störfeldgradienten vorhanden, sodass zwischen dem ersten Magnetfeldsensor 1 und dem dritten Magnetfeldsensor 3 aufsummiert ein nichtlinearer Störfeldgradient vorliegt. Durch die Definition des messbaren Gradienten zwischen dem ersten Magnetfeldsensor 1 und dem zweiten Magnetfeldsensor 2 als rein linear, ist zur Abbildung eines nichtlinearen Störgradienten zwischen dem ersten Magnetfeldsensor 1 und dem dritten Magnetfeldsensor 3 zu dem linearen Anteil 205 zwischen dem zweiten Magnetfeldsensor 2 und dem dritten Magnetfeldsensor 3 an der Position des dritten Magnetfeldsensors 3, der Anteil 206 aufzuaddieren. Somit liegt an der Position des dritten Magnetfeldsensors 3 in der Axialrichtung 111 auch ein nicht linearer Anteil 206 vor.

Es sei angemerkt, dass die zuvor beschriebenen Formeln zum Berechnen eines auf die Welle 5 des magnetoelastischen Drehmomentsensors 10 aufgebrachten Drehmoments eine Eliminierung bzw. Kompensation eines Störfeldes im Umfeld der Welle 5 bzw. des magnetoelastischen Drehmomentsensors 10 unabhängig vom genauen Ablauf des Störfeldes in der Axialrichtung 111 ermöglichen.

Die verschiedenen Anteile des Störfeldes aus Figur 4 lassen sich mittels der folgenden Formeln ermitteln:

$$\Delta S_{lin}(d_{23}) = \frac{X}{Y}$$

wobei:

$$X = \frac{d_{23}}{d_{12}} \times (N_{SE1}(M_2) - N_{SE2}(M_2)) \times (N_{SE2} - N_{SE3} + \Delta S_{n.l.}) - \frac{d_{23}}{d_{12}} \ldots$$
$$\times (N_{SE2}(M_2) - N_{SE3}(M_2)) \times (N_{SE1} - N_{SE2})$$

und

$$Y = N_{SE2}(M_2) - N_{SE3}(M_2) - \frac{d_{23}}{d_{12}}\left(N_{SE1}(M_2) - N_{SE2}(M_2)\right)$$

$$\Delta S_{x,lin}(d_{12}) = \Delta S_{x,lin}(d_{23}) \times \frac{d_{12}}{d_{23}}$$

$$\Delta S_{lin}(d_{13}) = \Delta S_{lin}(d_{23}) \times \frac{d_{12} + d_{23}}{d_{23}}$$

Dabei sind:

- $\Delta S_{lin}(d_{23})$ der lineare Anteil 205 in "µT",
- $\Delta S_{lin}(d_{12})$ der lineare Anteil 204 in "µT",
- $\Delta S_{lin}(d_{13})$ der gesamte lineare Anteil des Magnetstörfeldes an der Position des dritten Magnetfeldsensors 3, der der Summe aus dem linearen Anteil 205 und dem linearen Anteil 204 entspricht, und
- $\Delta S_{n.l.}$ der nicht lineare Anteil 206.

Die Nutzfelder $N_{SEa}(M_2)$ in "µT" (mit a=1 für den ersten Magnetfeldsensor 1, a=2 für den zweiten Magnetfeldsensor 2 und a=3 für den dritten Magnetfeldsensor 3) sind bei der Kalibrierung (frei von Störfeldern und nach Offsetbereinigung) zu bestimmen, wobei ein Drehmoment $M_2$ » 0 Nm anliegen muss.

Bei den oben angegebenen Formeln zum Bestimmen der Störfeldanteile ist die Annahme zu machen, dass kein nichtlinearer Störfeldgradient vorhanden ist bzw. dass der nichtlineare Störfeldgradient vernachlässigbar ist, d.h. $\Delta S_{x,n.l.} = 0$. Zur Laufzeit kann der lineare Störfeldgradient überwacht werden, um bei Überschreiten eines definierten Grenzwerts das berechnete Drehmoment als nicht valide deklarieren zu können. Dies ist besonders vorteilhaft, da mit steigendem gemessenen linearen Störfeldgradienten auch der maximal mögliche Fehler im berechneten Drehmoment durch nichtlineare Störgradienten steigt.

Der homogene Anteil 203 des Störfeldes aus Figur 4 lässt sich mittels der folgenden Formeln ermitteln:

$$S_{x,hom} =$$

$$= \frac{N_{SE3}(M_2) \times (N_{SE2} - \Delta S_{lin}(d_{12})) - N_{SE2}(M_2) \times (N_{SE3} - \Delta S_{lin}(d_{12}) - \Delta S_{lin}(d_{23}) - \Delta S_{n.l.})}{N_{SE3}(M_2) - N_{SE2}(M_2)}$$

für $N_{SE2} \neq N_{SE3}$

$$S_{hom} = \frac{N_{SE2}(M_2)B_{SE1} - N_{SE1}(M_2)(B_{SE2} - \Delta S_{lin}(d_{12}))}{N_{SE2}(M_2) - N_{SE1}(M_2)}$$

für $N_{x,SE1} \neq N_{x,SE2}$

Durch entsprechende Aufsummation der einzelnen berechneten Störfeldanteile aus Figur 4, jeweils an den Positionen der Magnetfeldsensoren 1, 2 und 3, ist die gesamte betrachtete Störfeldkomponente somit an den Positionen der Magnetfeldsensoren bestimmbar. Die oben beschriebenen Anteile des Störfeldes, sowie die jeweiligen gesamten Störfeldkomponenten können mittels der Auswerteeinheit 6 berechnet werden.

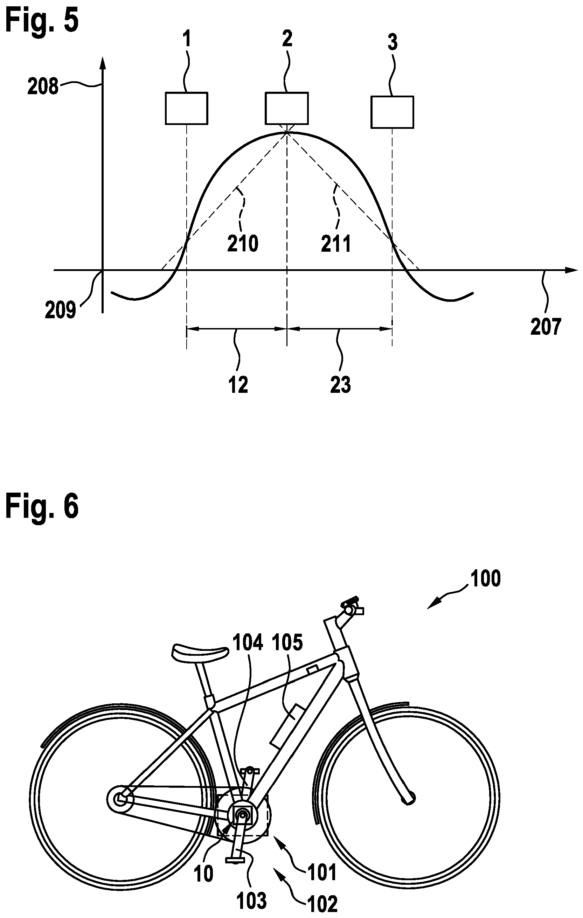

Figur 5 zeigt ein Diagramm der magnetischen Flussdichte in der Axialrichtung 111 eines Magnetfeldes, welches bei einer Drehmomentbelastung der Welle 5 eines beispielhaften magnetoelastischen Drehmomentsensors 10 gemäß dem ersten Ausführungsbeispiel erzeugbar und durch die drei Magnetfeldsensoren 1, 2, 3 des Drehmomentsensors 10 erfassbar ist.

Die x-Achse 207 bezeichnet den Abstand entlang der Welle 5 in der Axialrichtung 111 in "mm", gemessen von einem Ursprung 209, wobei die y-Achse 208 die Komponente der magnetischen Flussdichte in Axialrichtung 111 in "µT" bezeichnet. Der Nullwert des Ursprungs 209 in der x-Achse 207 entspricht einem Anfang der Welle 5.

Für diesen beispielhaften magnetoelastischen Drehmomentsensor 10 gilt:

$$\left| (N_{SE2} - N_{SE3}) - \frac{d_{23}}{d_{12}} (N_{SE1} - N_{SE2}) \right| > 50\mu\text{T}$$

mit $\dfrac{d_{23}}{d_{12}} \leq 1$

Veranschaulicht bedeutet dies, dass sich eine erste Steigung 210 und eine zweite Steigung 211 voneinander unterscheiden. Als erste Steigung 210 ist die Steigung der Geraden, die den Punkt, der durch die magnetische Flussdichte des Nutzfeldes an der Stelle des ersten Magnetfeldsensors 1 definiert ist, mit dem Punkt verbindet, der durch die magnetische Flussdichte des Nutzfeldes an der Stelle des zweiten Magnetfeldsensors 2 definiert ist. Entsprechend ist als zweite Steigung 211 die Steigung der Geraden, die den Punkt, der durch die magnetische Flussdichte des Nutzfeldes an der Stelle des zweiten Magnetfeldsensors 2 definiert ist, mit dem Punkt verbindet, der durch die magnetische Flussdichte des Nutzfeldes an der Stelle des dritten Magnetfeldsensors 3 definiert ist.

Hierbei ist insbesondere die erste Steigung 210 positiv und die zweite Steigung 211 negativ.

Figur 6 zeigt ein erfindungsgemäßes Fahrzeug 100 mit einem magnetoelastischen Drehmomentsensor 10 gemäß dem ersten Ausführungsbeispiel.

Bei dem Fahrzeug 100 handelt es sich um ein mit Muskelkraft und/oder Motorkraft betreibbares Fahrzeug, insbesondere ein Elektrofahrrad, das zur Unterstützung einer Tretkraft eines Fahrers mit einem elektrischen Antrieb 101 versehen ist. Der elektrische Antrieb 101 ist an einem Kurbeltrieb 102 mit einer ersten Kurbel 103 und einer zweiten Kurbel 104 angeordnet und wird von einem Akku 105 mit elektrischer Energie versorgt.

Der magnetoelastische Drehmomentsensor 10 kann als eine Einheit ausgebildet bzw. hergestellt sein und als solche am Kurbeltrieb 102 befestigt werden. Dabei sind die Magnetfeldsensoren 1, 2 und 3, die Welle 5 und die Auswerteeinheit 6 in vorteilhafter Weise in einem einzigen Gehäuse aufgenommen. Alternativ können die Magnetfeldsensoren 1, 2 und 3, die Welle 5 und die Auswerteeinheit 6 einzeln am Fahrzeug 100 derart befestigt werden, dass sie als der magnetoelastische Drehmomentsensor 10 gemäß der vorliegenden Erfindung zusammenwirken.

Der Einsatz des magnetoelastischen Drehmomentsensors 10 in ein Fahrzeug, wie beispielsweise das zuvor beschriebene Fahrzeug 100, ist nur eine mögliche Anwendung der vorliegenden Erfindung.

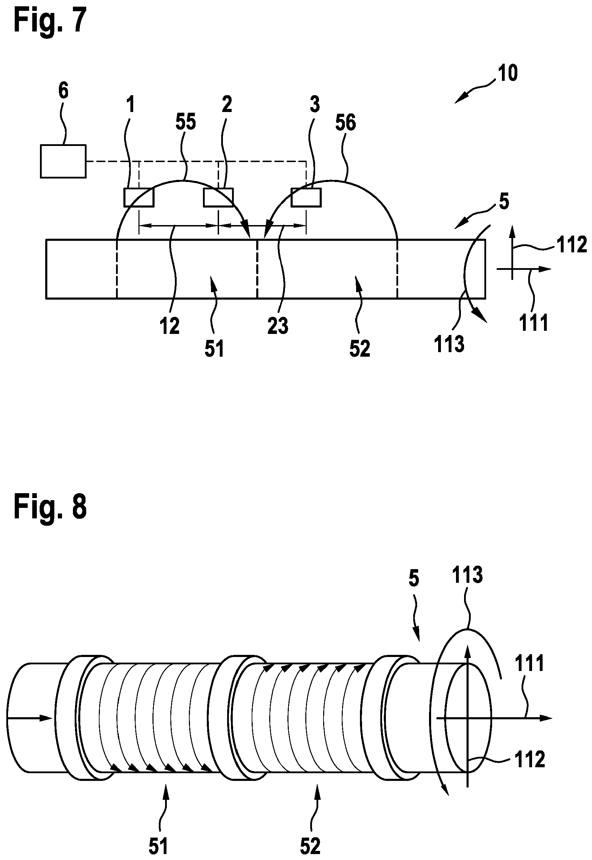

Figuren 7 bis 11 beziehen sich auf einen magnetoelastischen Drehmomentsensor 10 gemäß einem zweiten Ausführungsbeispiel der vorliegenden Erfindung.

Der magnetoelastische Drehmomentsensor 10 gemäß dem zweiten Ausführungsbeispiel unterscheidet sich von demjenigen gemäß dem ersten Ausführungsbeispiel grundsätzlich dadurch, dass in der Welle 5 des magnetoelastischen Drehmomentsensors 10 gemäß dem zweiten Ausführungsbeispiel ein erster magnetisierter Bereich 51 und ein zweiter magnetisierter Bereich 52 gebildet sind.

Weiterhin ist Figur 8 zu entnehmen, dass der erste magnetisierte Bereich 51 und der zweite magnetisierte Bereich 52 entgegengesetzte Magnetisierungen aufweisen. Betragsmäßig können die Magnetisierungen des ersten magnetisierten Bereichs 51 und des zweiten magnetisierten Bereichs 52 gleich gewählt sein. Es ist allerdings auch möglich, dass die Beträge der Magnetisierungen der magnetisierten Bereiche 51, 52 unterschiedlich sind.

Unter erneuten Verweis auf Figur 7, sind der erste Magnetfeldsensor 1 und der zweite Magnetfeldsensor 2 dem ersten magnetisierten Bereich 51 zugeordnet, wobei der dritte Magnetfeldsensor 3 dem zweiten magnetisierten Bereich 52 zugeordnet ist. Das heißt, dass der erste Magnetfeldsensor 1 und der zweite Magnetfeldsensor 2 jeweils eingerichtet sind, eine magnetische Flussdichte eines durch den ersten magnetisierten Bereich 51 erzeugten Magnetfelds (dargestellt durch die Magnetflusslinie 55) bei einer Drehmomentbeanspruchung der Welle 5 zu erfassen, wobei der dritte Magnetfeldsensor 3 eingerichtet ist, eine magnetische Flussdichte eines durch den zweiten magnetisierten Bereich 52 erzeugten Magnetfelds (dargestellt durch die Magnetflusslinie 56) bei einer Drehmomentbeanspruchung der Welle 5 zu erfassen.

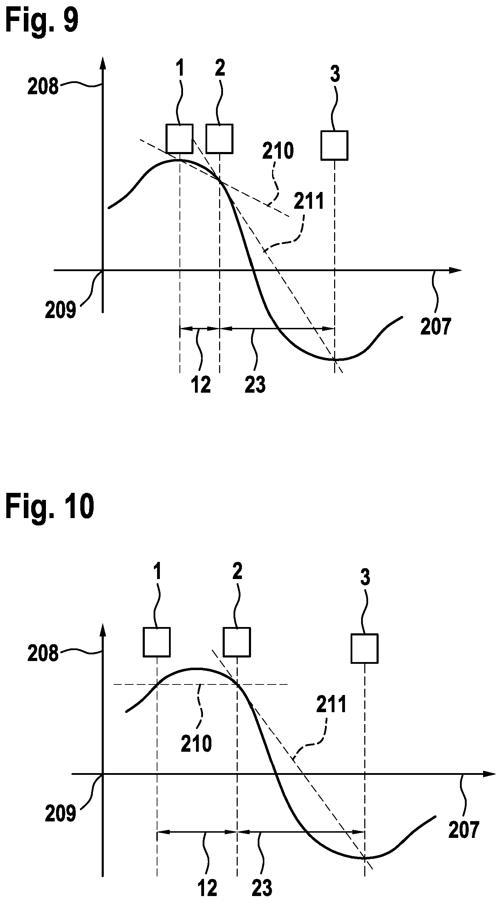

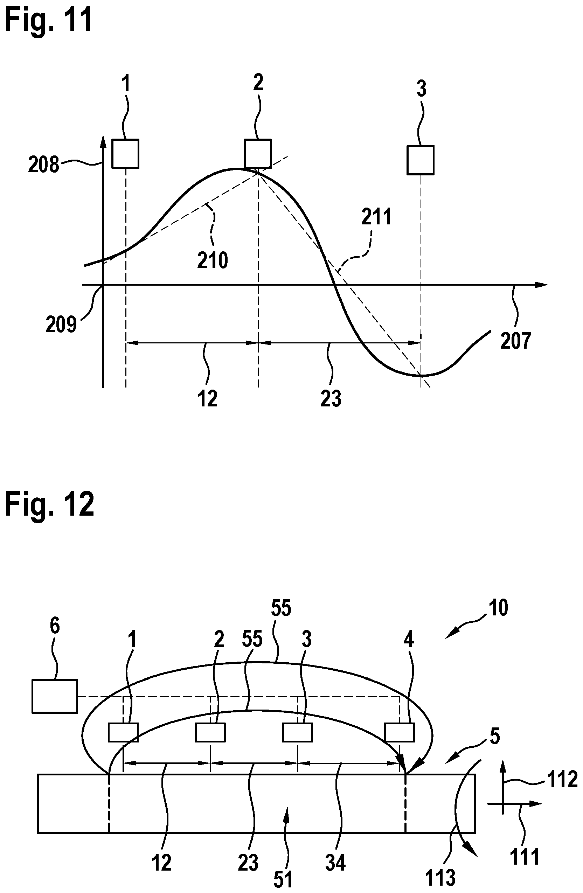

Figur 9 zeigt ein Diagramm der magnetischen Flussdichte in der Axialrichtung 111 eines Magnetfeldes, welches bei einer Drehmomentbelastung der Welle 5 eines ersten beispielhaften magnetoelastischen Drehmomentsensors 10 gemäß dem zweiten Ausführungsbeispiel erzeugbar und durch die drei Magnetfeldsensoren 1, 2, 3 des Drehmomentsensors 10 erfassbar ist. Figur 10 zeigt ein Diagramm der magnetischen Flussdichte in der Axialrichtung 111 eines Magnetfeldes, welches bei einer Drehmomentbelastung der Welle 5 eines zweiten beispielhaften magnetoelastischen Drehmomentsensors 10 gemäß dem zweiten Ausführungsbeispiel erzeugbar und durch die drei Magnetfeldsensoren 1, 2, 3 des Drehmomentsensors 10 erfassbar ist. Figur 11 zeigt ein Diagramm der magnetischen Flussdichte in der Axialrichtung 111 eines Magnetfeldes, welches bei einer Drehmomentbelastung der Welle 5 eines dritten beispielhaften magnetoelastischen Drehmomentsensors 10 gemäß dem zweiten Ausführungsbeispiel erzeugbar und durch die drei Magnetfeldsensoren 1, 2, 3 des Drehmomentsensors 10 erfassbar ist.

Bei jedem Diagramm bezeichnet die x-Achse 207 den Abstand entlang der Welle 5 in der Axialrichtung 111 in "mm", gemessen von einem Ursprung 209, wobei die y-Achse 208 die Komponente der magnetischen Flussdichte in Axialrichtung 111 in "$\mu$T" bezeichnet. Der Nullwert des Ursprungs 209 in der x-Achse 207 entspricht einem Anfang der Welle 5.

Für den ersten beispielhaften magnetoelastischen Drehmomentsensor 10 von Figur 9 gilt:

$$\left| (N_{SE1} - N_{SE2}) - \frac{d_{12}}{d_{23}} (N_{SE2} - N_{SE3}) \right| > 50\mu T$$

mit $\dfrac{d_{12}}{d_{23}} < 1$

Die Magnetfeldsensoren 1, 2, 3 sind relativ zueinander, zum ersten magnetisierten Bereich 51 und zum zweiten magnetisierten Bereich 52 derart angeordnet, dass beide Steigungen 210, 211 negativ und von unterschiedlicher Größe sind.

Für den zweiten beispielhaften magnetoelastischen Drehmomentsensor 10 von Figur 10 gilt:

$$\left| (N_{SE1} - N_{SE2}) - \frac{d_{12}}{d_{23}} (N_{SE2} - N_{SE3}) \right| > 50\mu T$$

mit $\dfrac{d_{12}}{d_{23}} < 1$

Hierbei sind die Magnetfeldsensoren 1, 2, 3 relativ zueinander, zum ersten magnetisierten Bereich 51 und zum zweiten magnetisierten Bereich 52 derart angeordnet, dass die Steigungen 210, 211 unterschiedliche Größen aufweisen, wobei die erste Steigung 210 Null und die zweite Steigung negativ ist.

Aus dem Vergleich zwischen den beispielhaften magnetoelastischen Drehmomentsensoren 10 von Figuren 9 und 10 ergibt sich, dass der Abstand 12 zwischen dem ersten Magnetfeldsensor 1 und dem zweiten Magnetfeldsensor 2 beim magnetoelastischen Drehmomentsensor 10 gemäß Figur 10 größer als derjenige beim magnetoelastischen Drehmomentsensor 10 gemäß Figur 9 ist. Auf der anderen Seite weisen beide magnetoelastische Drehmomentsensoren 10 den gleichen Abstand zwischen dem entsprechenden zweiten Magnetfeldsensor 2 und dem entsprechenden dritten Magnetfeldsensor 3 auf, so dass das Verhältnis des Abstands 12 zum Abstand 23 beim magnetoelastischen Drehmomentsensor 10 gemäß Figur 10 größer als dasjenige beim magnetoelastischen Drehmomentsensor 10 gemäß Figur 9 ist.

Für den beispielhaften magnetoelastischen Drehmomentsensor 10 von Figur 11 gilt:

$$\left| (N_{SE1} - N_{SE2}) - \frac{d_{12}}{d_{23}} (N_{SE2} - N_{SE3}) \right| > 50\mu T$$

mit $\dfrac{d_{12}}{d_{23}} < 1$

Aus dem Vergleich zwischen den beispielhaften magnetoelastischen Drehmomentsensoren 10 von Figuren 10 und 11 ergibt sich, dass der Abstand 12 zwischen dem ersten Magnetfeldsensor 1 und dem zweiten Magnetfeldsensor 2 beim magnetoelastischen Drehmomentsensor 10 gemäß Figur 11 größer als derjenige beim magnetoelastischen Drehmomentsensor 10 gemäß Figur 10 ist. Obwohl der Abstand 23 zwischen dem zweiten Magnetfeldsensor 2 und dem dritten Magnetfeldsensor 3 beim magnetoelastischen Drehmomentsensor 10 gemäß Figur 11 auch größer als derjenige beim magnetoelastischen Drehmomentsensor 10 gemäß Figur 10 ist, sind die Abstände 12, 23 derart gewählt, dass das Verhältnis des Abstands 12 zum Abstand 23 beim magnetoelastischen Drehmomentsensor 10 gemäß Figur 11 größer als dasjenige beim magnetoelastischen Drehmomentsensor 10 gemäß Figur 10 ist.

Vergleicht man nun die magnetoelastischen Drehmomentsensoren 10 von Figuren 9 bis 11 untereinander, lässt sich feststellen, dass der magnetoelastische Drehmomentsensor 10 von Figur 9 am kompaktesten in der Axialrichtung 111 ist, wobei der magnetoelastische Drehmomentsensor 10 von Figur 11 die niedrigste Kompaktheit in der Axialrichtung 111 aufweist. Auf der anderen Seite weist der magnetoelastische Drehmomentsensor 10 von Figur 11 das größte resultierende Nutzsignal nach Verrechnung der Einzelsignale mit Formel (5b) im Verhältnis zum aufgebrachten Drehmoment auf, wobei der magnetoelastische Drehmomentsensor 10 von Figur 9 das niedrigste resultierende Nutzsignal nach Verrechnung der Einzelsignale mit Formel (5b) im Verhältnis zum aufgebrachten Drehmoment aufweist.

Verallgemeinert heißt dies, dass beispielsweise bei gegebener Magnetisierung und festgelegten äußeren Sensorpositionen eine Maximierung des resultierenden, effektiven Nutzsignals nach Verrechnung der Einzelsignale und im Verhältnis zum aufgebrachten Drehmoment des magnetoelastischen Drehmomentsensors 10 durch die freie Wahl der Abstände 12 und 23 ermöglicht wird.

Figur 12 zeigt einen magnetoelastischen Drehmomentsensor 10 gemäß einem dritten Ausführungsbeispiel der vorliegenden Erfindung.

Der magnetoelastische Drehmomentsensor 10 gemäß dem dritten Ausführungsbeispiel unterscheidet sich von demjenigen gemäß dem ersten Ausführungsbeispiel dadurch, dass der magnetoelastische Drehmomentsensor 10 gemäß dem dritten Ausführungsbeispiel neben dem ersten Magnetfeldsensor 1, den zweiten Magnetfeldsensor 2 und dem dritten Magnetfeldsensor 3 noch einen vierten Magnetfeldsensor 4 aufweist.

Dabei ist der dritte Magnetfeldsensor 3 in der Axialrichtung 111 zwischen dem zweiten Magnetfeldsensor 2 und dem vierten Magnetfeldsensor 4 angeordnet und weist in der Axialrichtung 111 einen Abstand 34 vom vierten Magnetfeldsensor 4 auf.

Ferner sind alle vier Magnetfeldsensoren 1, 2, 3, 4 dem magnetisierten Bereich 51 zugeordnet. Das heißt, dass der vierte Magnetfeldsensor 4, wie auch der erste Magnetfeldsensor 1, der zweite Magnetfeldsensor 2 und der dritte Magnetfeldsensor 3, mindestens eine Messachse aufweist und eingerichtet ist, eine Komponente der magnetischen Flussdichte eines Magnetfeldes in Richtung der mindestens einen Messachse, welches bei einer Drehmomentbelastung der Welle 5

durch den magnetisierten Bereich 51 erzeugt wird, zu erfassen.

Beim magnetoelastischen Drehmomentsensor 10 gemäß dem dritten Ausführungsbeispiel ist eine Summe aus dem Abstand 12 zwischen dem ersten Magnetfeldsensor 1 und dem zweiten Magnetfeldsensor 2 in der Axialrichtung 111, dem Abstand 23 zwischen dem zweiten Magnetfeldsensor 2 und dem dritten Magnetfeldsensor 3 in der Axialrichtung 111 und einem Abstand 34 zwischen dem dritten Magnetfeldsensor 3 und dem vierten Magnetfeldsensor 4 in der Axialrichtung 1111 größer gleich 6 mm und kleiner als 20 mm.

Die Auswerteeinheit 6 ist dabei eingerichtet, ein viertes Messsignal des vierten Magnetfelssensors 4 zu erfassen. Dazu ist der vierte Magnetfeldsensor 4 mit der Auswerteeinheit 6 insbesondere informationstechnisch verbunden.

Es ist jedoch auch möglich, dass die Schnittstelle zwischen den Magnetfeldsensoren 1, 2, 3, 4 und der Auswerteeinheit 6 analog ausgeführt ist.

Zum Bestimmen eines auf die Welle 5 ausgeübten Drehmoments ist die Auswerteeinheit 6 eingerichtet, neben dem ersten Messsignal, dem zweiten Messsignal, dem dritten Messsignal und dem Verhältnis des Abstands 23 zwischen dem zweiten Magnetfeldsensor 2 und dem dritten Magnetfeldsensor 3 in der Axialrichtung 111 zu dem Abstand 12 zwischen dem ersten Magnetfeldsensor 1 und dem zweiten Magnetfeldsensor 2 in der Axialrichtung 111 zusätzlich das vierte Messsignal und ein Verhältnis eines Abstands 23 zwischen dem zweiten Magnetfeldsensor 2 und dem dritten Magnetfeldsensor 3 in der Axialrichtung 111 zu einem Abstand 34 zwischen dem dritten Magnetfeldsensor 3 und dem vierten Magnetfeldsensor 4 in der Axialrichtung 111 zu verwenden.

Insbesondere ist das vierte Messsignal wie auch das erste Messsignal, das zweite Messsignal und das dritte Messsignal ein offsetbereinigtes Messsignal. Die Offsetbereinigung erfolgt in vorteilhafter Weise in einem drehmomentfreien und störfeldfreien Zustand.

Dabei entspricht das erste Messsignal der Komponente der magnetischen Flussdichte des Magnetfeldes in der Axialrichtung an der Position des ersten Magnetfeldsensors, das zweite Messsignal der Komponente der magnetischen Flussdichte des Magnetfeldes in der Axialrichtung an der Position des zweiten Magnetfeldsensors, das dritte Messsignal der Komponente der magnetischen Flussdichte des Magnetfeldes in der Axialrichtung an der Position des dritten Magnetfeldsensors und das vierte Messsignal der Komponente der magnetischen Flussdichte des Magnetfeldes in der Axialrichtung an der Position des vierten Magnetfeldsensors.

Vorzugsweise ist die Auswerteeinheit 6 eingerichtet, das auf die Welle 5 ausgeübte Drehmoment mittels der Formel:

$$M = \left[ (B_{SE2} - B_{SE3}) - k \times \frac{d_{23}}{d_{12}} \times (B_{SE1} - B_{SE2}) - (1 - k) \times \frac{d_{23}}{d_{34}} ... \times (B_{SE3} - B_{SE4}) \right] \times s_{14}$$

mit $0 \leq k \leq 1$
zu bestimmen. Dabei sind:

- M das zu bestimmende Drehmoment in "Nm",
- $B_{SE1}$ die Komponente der magnetischen Flussdichte des Magnetfeldes in der Axialrichtung an der Position des ersten Magnetfeldsensors in "$\mu$T",
- $B_{SE2}$ die Komponente der magnetischen Flussdichte des Magnetfeldes in der Axialrichtung an der Position des zweiten Magnetfeldsensors in "$\mu$T",
- $B_{SE3}$ die Komponente der magnetischen Flussdichte des Magnetfeldes in der Axialrichtung an der Position des dritten Magnetfeldsensors in "$\mu$T",
- $B_{SE4}$ das vierte Messsignal in "$\mu$T",
- $d_{12}$ der Abstand 12 zwischen dem ersten Magnetfeldsensor 1 und dem zweiten Magnetfeldsensor 2 in "mm",
- $d_{23}$ der Abstand 23 zwischen dem zweiten Magnetfeldsensor 2 und dem dritten Magnetfeldsensor 3 in "mm",
- $d_{34}$ der Abstand 34 zwischen dem dritten Magnetfeldsensor 3 und dem vierten Magnetfeldsensor 4 in "mm",
- $s_{14}$ die Sensitivität des magnetoelastischen Drehmomentsensors 10 in "Nm/$\mu$T", und
- k ein Gewichtsfaktor, durch den die Kompensationseigenschaften für einen anwendungsspezifischen nichtlinearen Störfeldanteil optimiert werden können (vollständige Eliminierung) oder allgemein der Worst-Case-Fehler durch nichtlineare Störfeldanteile minimiert werden kann.

Durch diese Berechnungsformel können bei der Berechnung des Drehmoments Störfeldanteile aufgrund homogener Störfelder und überlagerter linearer Störfeldgradienten unabhängig vom gewählten Wert für den Gewichts-faktor k, solange $0 \leq k \leq 1$, eliminiert werden. Außerdem kann mittels des Gewichtsfaktors ein nichtlinearer Anteil eines Störfeldgradienten maskiert und eliminiert werden oder eine Worst-Case Fehlerminimierung bei verschiedenen vorhandenen nicht linearen Störfeldgradienten im Umfeld der Welle 5 bzw. des magnetoelastischen Drehmomentsensors 10 erreicht werden, wie dies bei einem Einsatz in orts- und umgebungsveränderlichen Anwendungen der Fall ist, bei denen kein stets gleich ausgebildeter nichtlinearer Störfeldgradient garantiert werden kann.

In vorteilhafter Weise wird die Sensitivität des magnetoelastischen Drehmomentsensors 10 mittels Zweipunkt-Kalibrierung frei von Störfeldern und nach Offsetbereinigung ermittelt. Insbesondere wird die Sensitivität gemäß Formel 7 aus dem allgemeinen Teil der Beschreibung ermittelt.

Insbesondere sind der erste Magnetfeldsensor 1, der zweite Magnetfeldsensor 2, der dritte Magnetfeldsensor 3 und der vierte Magnetfeldsensor 4 relativ zueinander und relativ zum magnetisierten Bereich 51 derart angeordnet, dass die folgende Bedingung erfüllt ist:

$$\left|(N_{SE2} - N_{SE3}) - k \times \frac{d_{23}}{d_{12}} \times (N_{SE1} - N_{SE2}) - (1-k) \times \frac{d_{23}}{d_{34}} \ldots \times (N_{SE3}\right.$$

$$\left. - N_{SE4})\right| > 50\ \mu\text{T}$$

mit $0 \leq k \leq 1$.

Dabei sind:

- $N_{SE1}$ eine vorbestimmte Komponente der magnetischen Flussdichte in "$\mu$T" eines durch den magnetisierten Bereich 51 erzeugten Magnetfeldes an einer Position des ersten Magnetfeldsensors 1 aufgrund einer Beanspruchung der Welle 5 mit einem maximalen, durch den magnetoelastischen Drehmomentsensor 10 messbaren Drehmoment,
- $N_{SE2}$ eine vorbestimmte Komponente der magnetischen Flussdichte in "$\mu$T" eines durch den magnetisierten Bereich 51 erzeugten Magnetfeldes an einer Position des zweiten Magnetfeldsensors 2 aufgrund einer Beanspruchung der Welle 5 mit dem maximalen, durch den magnetoelastischen Drehmomentsensor 10 messbaren Drehmoment,
- $N_{SE3}$ eine vorbestimmte Komponente der magnetischen Flussdichte in "$\mu$T" eines durch den magnetisierten Bereich 51 erzeugten Magnetfeldes an einer Position des dritten Magnetfeldsensors 3 aufgrund einer Beanspruchung der Welle 5 mit einem maximalen, durch den magnetoelastischen Drehmomentsensor 10 messbaren Drehmoment,
- $N_{SE4}$ eine vorbestimmte Komponente der magnetischen Flussdichte in "$\mu$T" eines durch den magnetisierten Bereich 51 erzeugten Magnetfeldes an einer Position des vierten Magnetfeldsensors 4 aufgrund einer Beanspruchung der Welle 5 mit einem maximalen, durch den magnetoelastischen Drehmomentsensor 10 messbaren Drehmoment,
- $d_{12}$ der Abstand 12 zwischen dem ersten Magnetfeldsensor und dem zweiten Magnetfeldsensor 10 in "mm",
- $d_{23}$ der Abstand 23 zwischen dem zweiten Magnetfeldsensor und dem dritten Magnetfeldsensor 10 in "mm",
- $d_{34}$ der Abstand 34 zwischen dem dritten Magnetfeldsensor und dem vierten Magnetfeldsensor 10 in "mm", und
- $k$ der zuvor beschriebene Gewichtsfaktor.

Insbesondere sind die oben genannten vorbestimmten magnetische Flussdichten offsetbereinigte und störfeldfreie magnetische Flussdichten.

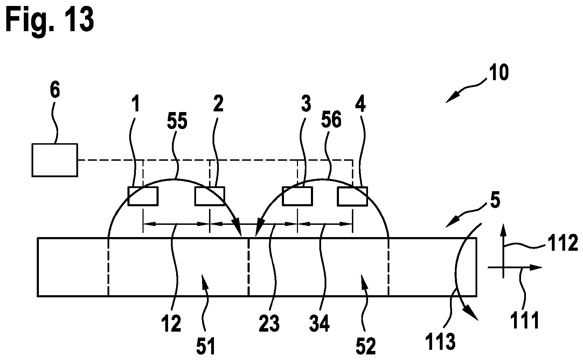

Figur 13 zeigt einen magnetoelastischen Drehmomentsensor 10 gemäß einem vierten Ausführungsbeispiel der vorliegenden Erfindung.

Der magnetoelastische Drehmomentsensor 10 gemäß dem vierten Ausführungsbeispiel unterscheidet sich von demjenigen gemäß dem dritten Ausführungsbeispiel grundsätzlich dadurch, dass der magnetoelastische Drehmomentsensor 10 gemäß dem vierten Ausführungsbeispiel neben dem ersten magnetisierten Bereich 51 auch einen zweiten magnetisierten Bereich 52 aufweist.

Dabei sind der erste Magnetfeldsensor 1 und der zweite Magnetfeldsensor 2 dem ersten magnetisierten Bereich 51 zugeordnet, wobei der dritte Magnetfeldsensor 3 und der vierte Magnetfeldsensor 4 dem zweiten magnetisierten Bereich 52 zugeordnet sind.

Das heißt, dass der erste Magnetfeldsensor 1 und der zweite Magnetfeldsensor 2 jeweils eingerichtet sind, eine oder mehrere (zwei oder drei) Komponenten der magnetischen Flussdichte eines Magnetfeldes, welches bei einer Drehmomentbelastung der Welle 5 durch den ersten magnetisierten Bereich 51 erzeugt wird, zu erfassen, wobei der dritte Magnetfeldsensor 3 und der vierte Magnetfeldsensor 4, jeweils eingerichtet sind, eine oder mehrere (zwei oder drei) Komponenten der magnetischen Flussdichte eines Magnetfeldes, welches bei einer Drehmomentbelastung der Welle 5 durch den zweiten magnetisierten Bereich 52 erzeugt wird, zu erfassen.

Insbesondere weisen der erste magnetisierte Bereich 51 und der zweite magnetisierte Bereich 52 entgegengesetzte Magnetisierungen auf, die betragsmäßig gleich sein können. Alternativ können die Beträge der Magnetisierungen der magnetisierten Bereiche 51, 52 unterschiedlich sein.

Obwohl das Fahrzeug 100 aus Figur 6 in Kombination mit einem magnetoelastischen Drehmomentsensor 10 gemäß dem ersten Ausführungsbeispiel beschrieben wurde, sei angemerkt, dass beim Fahrzeug 100 auch ein magnetoelastischer Drehmomentsensor 100 gemäß einem der anderen beschriebenen Ausführungsbeispiele verwendet werden kann.

Ein besonderer Vorteil der vorliegenden Erfindung besteht darin, dass die beschriebene Störfeldeliminierung/-kompensierung realisierbar ist, auch wenn die Welle 5 des magnetoelastischen Drehmomentsensors 10 nur (maximal) einen magnetisierten Bereich 51 oder nur (maximal) zwei magnetisierte Bereiche 52, also weniger als drei magnetisierte Bereiche, aufweist.

Es sei angemerkt, dass mit der vorliegenden Erfindung jedoch auch mit einer Welle 5, die mehr als zwei magnetisierte Bereiche aufweist, die beschriebene Störfeldeliminierung/-kompensierung realisierbar ist.

Neben der vorstehenden schriftlichen Beschreibung der Erfindung wird zu deren ergänzender Offenbarung hiermit explizit auf die zeichnerische Darstellung der Erfindung in den Fig. 1 bis 13 Bezug genommen.

**Patentansprüche**

1. Magnetoelastischer Drehmomentsensor (10), umfassend:

   - eine Welle (5) mit nur einem ersten magnetisierten Bereich (51) und einem zweiten magnetisierten Bereich (52), wobei der erste magnetisierte Bereich (51) und der zweite magnetisierte Bereich (52) entgegengesetzte Magnetisierungen aufweisen,
   - wobei die Welle (5) eine Axialrichtung (111) und eine Radialrichtung (112) aufweist,
   - mindestens drei Magnetfeldsensoren, die jeweils mindestens eine Messachse aufweisen und eingerichtet sind, eine Komponente einer magnetischen Flussdichte eines Magnetfeldes in Richtung der mindestens einen Messachse zu erfassen, und
   - eine Auswerteeinheit (6),
   - wobei die mindestens drei Magnetfeldsensoren einen ersten Magnetfeldsensor (1), einen zweiten Magnetfeldsensor (2) und einen dritten Magnetfeldsensor (3) umfassen, wobei der zweite Magnetfeldsensor (2) in der Axialrichtung (111) zwischen dem ersten Magnetfeldsensor (1) und dem dritten Magnetfeldsensor (3) angeordnet ist,
   - wobei der erste Magnetfeldsensor (1) und der zweite Magnetfeldsensor (2) dem ersten magnetisierten Bereich (51) und der dritte Magnetfeldsensor (3) dem zweiten magnetisierten Bereich (52) zugeordnet sind,
   - wobei mindestens einer der mindestens drei Magnetfeldsensoren relativ zu dem mindestens einen magnetisierten Bereich (51; 52) derart angeordnet ist, dass der Magnetfeldsensor eingerichtet ist, eine Komponente einer magnetischen Flussdichte eines Magnetfeldes, in Richtung der jeweiligen mindestens einen Messachse zu erfassen, wobei das Magnetfeld bei einer Drehmomentbeanspruchung der Welle (5) durch den mindestens einen magnetisierten Bereich (51; 52) erzeugbar ist, und
   - wobei die Auswerteeinheit (6) eingerichtet ist, mindestens ein Messsignal des ersten Magnetfeldsensors (1), mindestens ein Messsignal des zweiten Magnetfeldsensors (2) und mindestens ein Messsignal des dritten Magnetfeldsensors (3) zu erfassen und ein auf die Welle (5) ausgeübtes Drehmoment basierend auf dem mindestens einen Messsignal des ersten Magnetfeldsensors (1), dem mindestens einen Messsignal des zweiten Magnetfeldsensors (2), dem mindestens einen Messsignal des dritten Magnetfeldsensors (3) und einem Verhältnis eines Abstands (23) zwischen dem zweiten Magnetfeldsensor (2) und dem dritten Magnetfeldsensor (3) in der Axialrichtung (111) zu einem Abstand (12) zwischen dem ersten Magnetfeldsensor (1) und dem zweiten Magnetfeldsensor (2) in der Axialrichtung (111) zu bestimmen.

2. Magnetoelastischer Drehmomentsensor (10) nach Anspruch 1, wobei die mindestens eine Messachse des ersten Magnetfeldsensors (1) und/oder die mindestens eine Messachse des zweiten Magnetfeldsensors (2) und/oder die mindestens eine Messachse des dritten Magnetfeldsensors (3) jeweils eine in der Axialrichtung (111) oder der Radialrichtung (112) der Welle (5) parallele Messachse umfasst/umfassen, wobei das mindestens eine Messsignal des ersten Magnetfeldsensors (1) ein erstes Messsignal umfasst, welches einer Komponente der magnetischen Flussdichte des Magnetfeldes in der Axialrichtung (111) oder der Radialrichtung (112) der Welle (5) an der Position des ersten Magnetfeldsensors (1) entspricht und/oder das mindestens eine Messsignal des zweiten Magnetfeldsensors (2) ein zweites Messsignal umfasst, welches einer Komponente der magnetischen Flussdichte des Magnetfeldes in der Axialrichtung (111) oder der Radialrichtung (112) der Welle (5) an der Position des zweiten Magnetfeldsensors (2) entspricht und/oder das mindestens eine Messsignal des dritten Magnetfeldsensors (3) ein drittes Messsignal umfasst, welches einer Komponente der magnetischen Flussdichte des Magnetfeldes in der Axialrichtung (111) oder der Radialrichtung (112) der Welle (5) an der Position des dritten Magnetfeldsensors (3) entspricht, oder

   wobei die mindestens eine Messachse des ersten Magnetfeldsensors (1) und/oder die mindestens eine Messachse des zweiten Magnetfeldsensors (2) und/oder die mindestens eine Messachse des dritten Magnetfeldsensors (3) jeweils zwei oder drei orthogonal zueinander ausgerichtete Messachsen umfasst/umfassen, wobei das mindestens eine Messsignal des ersten Magnetfeldsensors (1) zwei oder drei Messsignale und/oder das mindestens eine Messsignal des zweiten Magnetfeldsensors (2) zwei oder drei Messsignale umfasst und/oder das mindestens eine Messsignal des dritten Magnetfeldsensors (3) zwei oder drei Messsignale umfasst, wobei aus den zwei oder drei Messsignalen eines jeweiligen Magnetfeldsensors eine Komponente der magnetischen Flussdichte des Magnetfeldes in der Axialrichtung (111) oder der Radialrichtung (112) der Welle (5) an der jeweiligen Position des Magnetfeldsensors bestimmbar ist.

3. Magnetoelastischer Drehmomentsensor (10) nach Anspruch 1, wobei die Auswerteeinheit (6) eingerichtet ist, zum Bestimmen des auf die Welle (5) ausgeübten Drehmoments zusätzlich eine Sensitivität des magnetoelastischen Drehmomentsensors (10) zu verwenden.

**4.** Magnetoelastischer Drehmomentsensor (10) nach Anspruch 3, wobei die Auswerteeinheit eingerichtet ist, das auf die Welle (5) ausgeübte Drehmoment mittels der Formel

$$M = \left[ (B_{SE2} - B_{SE3}) - \frac{d_{23}}{d_{12}} \times (B_{SE1} - B_{SE2}) \right] \times s_{13}$$

zu bestimmen, wobei:

- M das zu bestimmende Drehmoment in "Nm",
- $B_{SE1}$ die Komponente der magnetischen Flussdichte des Magnetfeldes in der Axialrichtung bzw. in der Radialrichtung an der Position des ersten Magnetfeldsensors in "$\mu$T",
- $B_{SE2}$ die Komponente der magnetischen Flussdichte des Magnetfeldes in der Axialrichtung bzw. in der Radialrichtung an der Position des zweiten Magnetfeldsensors in "$\mu$T",
- $B_{SE3}$ die Komponente der magnetischen Flussdichte des Magnetfeldes in der Axialrichtung bzw. in der Radialrichtung an der Position des dritten Magnetfeldsensors in "$\mu$T",
- $d_{12}$ der Abstand (12) zwischen dem ersten Magnetfeldsensor (1) und dem zweiten Magnetfeldsensor (2) in "mm",
- $d_{23}$ der Abstand (23) zwischen dem zweiten Magnetfeldsensor (2) und dem dritten Magnetfeldsensor (3) in "mm",
- und $s_{13}$ die Sensitivität des magnetoelastischen Drehmomentsensors (10) in "Nm/$\mu$T" sind.

**5.** Magnetoelastischer Drehmomentsensor (10) nach Anspruch 3, wobei die Auswerteeinheit (6) eingerichtet ist, das auf die Welle (5) ausgeübte Drehmoment mittels der Formel

$$M = \left[ (B_{SE2} - B_{SE3}) - k \times \frac{d_{23}}{d_{12}} \times (B_{SE1} - B_{SE2}) \right] \times s_{13}$$

mit $0 \leq k \leq 1$,
insbesondere mit $0{,}9 \leq k < 1$ oder $1 < k \leq 1{,}1$
zu bestimmen, wobei:

- M das zu bestimmende Drehmoment in "Nm",
- $B_{SE1}$ die Komponente der magnetischen Flussdichte des Magnetfeldes in der Axialrichtung bzw. in der Radialrichtung an der Position des ersten Magnetfeldsensors in "$\mu$T",
- $B_{SE2}$ die Komponente der magnetischen Flussdichte des Magnetfeldes in der Axialrichtung bzw. in der Radialrichtung an der Position des zweiten Magnetfeldsensors in "$\mu$T",
- $B_{SE3}$ die Komponente der magnetischen Flussdichte des Magnetfeldes in der Axialrichtung bzw. in der Radialrichtung an der Position des dritten Magnetfeldsensors in "$\mu$T",
- $d_{12}$ der Abstand (12) zwischen dem ersten Magnetfeldsensor (1) und dem zweiten Magnetfeldsensor (2) in "mm",
- $d_{23}$ der Abstand (23) zwischen dem zweiten Magnetfeldsensor (2) und dem dritten Magnetfeldsensor (3) in "mm",
- $s_{13}$ die Sensitivität des magnetoelastischen Drehmomentsensors (10) in "Nm/$\mu$T", und
- k ein Gewichtsfaktor sind.

**6.** Magnetoelastischer Drehmomentsensor (10) nach einem der vorherigen Ansprüche, wobei der erste Magnetfeldsensor (1), der zweite Magnetfeldsensor (2) und der dritte Magnetfeldsensor (3) relativ zueinander und relativ zu dem nur einen ersten magnetisierten Bereich (51) und dem zweiten magnetisierten Bereich (52) derart angeordnet sind, dass eine der folgenden beiden Bedingungen erfüllt ist:

$$\left| (N_{SE2} - N_{SE3}) - \frac{d_{23}}{d_{12}} \times (N_{SE1} - N_{SE2}) \right| > 0 \ \mu T \quad \text{mit} \quad \frac{d_{23}}{d_{12}} \leq 1$$

$$\left|(N_{SE1} - N_{SE2}) - \frac{d_{12}}{d_{23}} \times (N_{SE2} - N_{SE3})\right| > 0 \ \mu T \quad \text{mit} \quad \frac{d_{12}}{d_{23}} < 1,$$

wobei der erste Magnetfeldsensor (1), der zweite Magnetfeldsensor (2) und der dritte Magnetfeldsensor (3) relativ zueinander und relativ zu dem nur einen ersten magnetisierten Bereich (51) und dem zweiten magnetisierten Bereich (52) insbesondere derart angeordnet sind, dass eine der folgenden beiden Bedingungen erfüllt ist:

$$\left|(N_{SE2} - N_{SE3}) - \frac{d_{23}}{d_{12}} \times (N_{SE1} - N_{SE2})\right| > 50 \ \mu T \quad \text{mit} \quad \frac{d_{23}}{d_{12}} \leq 1$$

$$\left|(N_{SE1} - N_{SE2}) - \frac{d_{12}}{d_{23}} \times (N_{SE2} - N_{SE3})\right| > 50 \ \mu T \quad \text{mit} \quad \frac{d_{12}}{d_{23}} < 1,$$

wobei:

- $N_{SE1}$ eine vorbestimmte Komponente der magnetischen Flussdichte in "$\mu T$" eines durch den mindestens einen magnetisierten Bereich (51; 52) erzeugten Magnetfeldes an einer Position des ersten Magnetfeldsensors (1) aufgrund einer Beanspruchung der Welle (5) mit einem maximalen, durch den magnetoelastischen Drehmomentsensor (10) messbaren Drehmoment,
- $N_{SE2}$ eine vorbestimmte Komponente der magnetischen Flussdichte in "$\mu T$" eines durch den mindestens einen magnetisierten Bereich (51; 52) erzeugten Magnetfeldes an einer Position des zweiten Magnetfeldsensors (2) aufgrund einer Beanspruchung der Welle (5) mit dem maximalen, durch den magnetoelastischen Drehmomentsensor (10) messbaren Drehmoment, und
- $N_{SE3}$ eine vorbestimmte Komponente der magnetischen Flussdichte in "$\mu T$" eines durch den mindestens einen magnetisierten Bereich (51; 52) erzeugten Magnetfeldes an einer Position des dritten Magnetfeldsensors (3) aufgrund einer Beanspruchung der Welle (5) mit einem maximalen, durch den magnetoelastischen Drehmomentsensor (10) messbaren Drehmoment sind.

7. Magnetoelastischer Drehmomentsensor (10) nach einem der vorherigen Ansprüche, wobei eine Summe aus dem Abstand (12) zwischen dem ersten Magnetfeldsensor (1) und dem zweiten Magnetfeldsensor (2) in der Axialrichtung (111) und dem Abstand (23) zwischen dem zweiten Magnetfeldsensor (2) und dem dritten Magnetfeldsensor (3) in der Axialrichtung (111) größer gleich 4 mm und kleiner als 20 mm ist.

8. Magnetoelastischer Drehmomentsensor (10) nach einem der Ansprüche 1 bis 3, wobei die mindestens drei Magnetfeldsensoren den ersten Magnetfeldsensor (1), den zweiten Magnetfeldsensor (2), den dritten Magnetfeldsensor (3) und einen vierten Magnetfeldsensor (4) umfassen, wobei der dritte Magnetfeldsensor (3) in der Axialrichtung (111) zwischen dem zweiten Magnetfeldsensor (2) und dem vierten Magnetfeldsensor (4) angeordnet ist, wobei die Auswerteeinheit (6) eingerichtet ist, mindestens ein Messsignal des vierten Magnetfelssensors (4) zu erfassen und zum Bestimmen eines auf die Welle (5) ausgeübten Drehmoments zusätzlich das mindestens eine Messsignal des vierten Magnetfeldsensors (4) und ein Verhältnis eines Abstands (23) zwischen dem zweiten Magnetfeldsensor (2) und dem dritten Magnetfeldsensor (3) in der Axialrichtung (111) zu einem Abstand (34) zwischen dem dritten Magnetfeldsensor (3) und dem vierten Magnetfeldsensor (4) in der Axialrichtung (111) zu verwenden.

9. Magnetoelastischer Drehmomentsensor (10) nach Anspruch 8, wobei die mindestens eine Messachse des vierten Magnetfeldsensors (4) eine in der Axialrichtung (111) oder der Radialrichtung (112) der Welle parallele Messachse umfasst, wobei das mindestens eine Messsignal des vierten Magnetfeldsensors (4) ein viertes Messsignal umfasst, welches einer Komponente der magnetischen Flussdichte des Magnetfeldes in der Axialrichtung (111) oder der Radialrichtung (112) der Welle (5) an der Position des vierten Magnetfeldsensors (4) entspricht, oder wobei die mindestens eine Messachse des vierten Magnetfeldsensors (4) zwei oder drei orthogonal zueinander ausgerichtete Messachsen umfasst, wobei das mindestens eine Messsignal des vierten Magnetfeldsensors (4) zwei oder drei Messsignale umfasst, aus denen eine Komponente der magnetischen Flussdichte des Magnetfeldes in der Axialrichtung (111) oder der Radialrichtung (112) der Welle (5) an der Position des vierten Magnetfeldsensors (4) bestimmbar ist.

10. Magnetoelastischer Drehmomentsensor (10) nach Anspruch 8 oder 9, wobei die Auswerteeinheit (6) eingerichtet ist, das auf die Welle (5) ausgeübte Drehmoment mittels der Formel

$$M = \left[ (B_{SE2} - B_{SE3}) - k \times \frac{d_{23}}{d_{12}} \times (B_{SE1} - B_{SE2}) - (1-k) \times \frac{d_{23}}{d_{34}} \times (B_{SE3} - B_{SE4}) \right] \times s_{14}$$

mit $0 \leq k \leq 1$
zu bestimmen, wobei:

- M das zu bestimmende Drehmoment in "Nm",
- $B_{SE1}$ die Komponente der magnetischen Flussdichte des Magnetfeldes in der Axialrichtung bzw. in der Radialrichtung an der Position des ersten Magnetfeldsensors in "μT",
- $B_{,SE2}$ die Komponente der magnetischen Flussdichte des Magnetfeldes in der Axialrichtung bzw. in der Radialrichtung an der Position des zweiten Magnetfeldsensors in "μT",
- $B_{,SE3}$ die Komponente der magnetischen Flussdichte des Magnetfeldes in der Axialrichtung bzw. in der Radialrichtung an der Position des dritten Magnetfeldsensors in "μT",
- $B_{SE4}$ die Komponente der magnetischen Flussdichte des Magnetfeldes in der Axialrichtung bzw. in der Radialrichtung an der Position des vierten Magnetfeldsensors in "μT",
- $d_{12}$ der Abstand (12) zwischen dem ersten Magnetfeldsensor (1) und dem zweiten Magnetfeldsensor (2) in "mm",
- $d_{23}$ der Abstand (23) zwischen dem zweiten Magnetfeldsensor (2) und dem dritten Magnetfeldsensor (3) in "mm",
- $d_{34}$ der Abstand (34) zwischen dem dritten Magnetfeldsensor (3) und dem vierten Magnetfeldsensor (4) in "mm",
- und $s_{14}$ die Sensitivität des magnetoelastischen Drehmomentsensors (10) in "Nm/μT", und
- k ein Gewichtsfaktor sind.

11. Magnetoelastischer Drehmomentsensor (10) nach Anspruch 8 bis 10, wobei der erste Magnetfeldsensor (1), der zweite Magnetfeldsensor (2), der dritte Magnetfeldsensor (3) und der vierte Magnetfeldsensor (4) relativ zueinander und relativ zu dem nur einen ersten magnetisierten Bereich (51) und dem zweiten magnetisierten Bereich (52) derart angeordnet sind, dass die folgende Bedingung erfüllt ist:

$$\left| (N_{SE2} - N_{SE3}) - k \times \frac{d_{23}}{d_{12}} \times (N_{SE1} - N_{SE2}) - (1-k) \times \frac{d_{23}}{d_{34}} \times (N_{SE3} - N_{SE4}) \right| > 0$$
$$\mu T$$

mit $0 \leq k \leq 1$
wobei der erste Magnetfeldsensor (1), der zweite Magnetfeldsensor (2), der dritte Magnetfeldsensor (3) und der vierte Magnetfeldsensor (4) relativ zueinander und relativ zu dem nur einen ersten magnetisierten Bereich (51) und dem zweiten magnetisierten Bereich (52) insbesondere derart angeordnet sind, dass die folgende Bedingung erfüllt ist:

$$\left| (N_{SE2} - N_{SE3}) - k \times \frac{d_{23}}{d_{12}} \times (N_{SE1} - N_{SE2}) - (1-k) \times \frac{d_{23}}{d_{34}} \times (N_{SE3} - N_{SE4}) \right| >$$
$$50 \ \mu T$$

mit $0 \leq k \leq 1$
wobei:

- $N_{SE1}$ eine vorbestimmte Komponente der magnetischen Flussdichte in "μT" eines durch den mindestens einen magnetisierten Bereich (51; 52) erzeugten Magnetfeldes an einer Position des ersten Magnetfeldsensors (1) aufgrund einer Beanspruchung der Welle (5) mit einem maximalen, durch den magnetoelastischen Drehmomentsensor messbaren Drehmoment,
- $N_{SE2}$ eine vorbestimmte Komponente der magnetischen Flussdichte in "μT" eines durch den mindestens einen magnetisierten Bereich (51; 52) erzeugten Magnetfeldes an einer Position des zweiten Magnetfeldsensors (2) aufgrund einer Beanspruchung der Welle (5) mit dem maximalen, durch den magnetoelastischen Drehmomentsensor messbaren Drehmoment,

• $N_{SE3}$ eine vorbestimmte Komponente der magnetischen Flussdichte in "μT" eines durch den mindestens einen magnetisierten Bereich (51; 52) erzeugten Magnetfeldes an einer Position des dritten Magnetfeldsensors (3) aufgrund einer Beanspruchung der Welle (5) mit einem maximalen, durch den magnetoelastischen Drehmomentsensor messbaren Drehmoment,

• $N_{SE4}$ eine vorbestimmte Komponente der magnetischen Flussdichte in "μT" eines durch den mindestens einen magnetisierten Bereich (51; 52) erzeugten Magnetfeldes an einer Position des vierten Magnetfeldsensors (4) aufgrund einer Beanspruchung der Welle (5) mit einem maximalen, durch den magnetoelastischen Drehmomentsensor (10) messbaren Drehmoment sind.

12. Magnetoelastischer Drehmomentsensor (10) nach Anspruch 10 oder 11, wobei eine Summe aus dem Abstand (12) zwischen dem ersten Magnetfeldsensor (1) und dem zweiten Magnetfeldsensor (2) in der Axialrichtung (111), dem Abstand (23) zwischen dem zweiten Magnetfeldsensor (2) und dem dritten Magnetfeldsensor (3) in der Axialrichtung (111) und dem Abstand (34) zwischen dem dritten Magnetfeldsensor (3) und dem vierten Magnetfeldsensor (4) größer gleich 6 mm und kleiner als 20 mm ist.

13. Magnetoelastischer Drehmomentsensor (10) nach einem der vorherigen Ansprüche, wobei der erste Magnetfeldsensor (1) und der zweite Magnetfeldsensor (2) dem ersten magnetisierten Bereich (51) und der dritte Magnetfeldsensor (3) und der vierte Magnetfeldsensor (4) dem zweiten magnetisierten Bereich (52) zugeordnet sind.

14. Magnetoelastischer Drehmomentsensor (10) nach einem der vorherigen Ansprüche, wobei der Drehmomentsensor (10) dazu eingerichtet ist, homogene Störfelder und lineare Störfeldgradienten in der Axialrichtung (111) der Welle (5) zu kompensieren.

15. Magnetoelastischer Drehmomentsensor (10) nach einem der vorherigen Ansprüche, wobei der erste magnetisierte Bereich (51) und der zweite magnetisierte Bereich (52) betragsmäßig unterschiedliche Magnetisierung haben.

16. Fahrzeug (100), umfassend einen magnetoelastischen Drehmomentsensor (10) nach einem der vorherigen Ansprüche, wobei das Fahrzeug (100) insbesondere elektrisch und/oder mit Muskelkraft betreibbar ist und einen Kurbeltrieb (102) aufweist, wobei der magnetoelastische Drehmomentsensor (10) am Kurbeltrieb (102) angeordnet ist.

17. Verfahren zum Bestimmen eines Drehmoments unter Verwendung eines magnetoelastischen Drehmomentsensors (10) nach einem der Ansprüche 1 bis 15, wobei das Verfahren die folgenden Schritte umfasst:

- Erfassen mindestens eines Messsignals des ersten Magnetfeldsensors (1),
- Erfassen mindestens eines Messsignals des zweiten Magnetfeldsensors (2),
- Erfassen mindestens eines Messsignals des dritten Magnetfeldsensors (3), und
- Bestimmen eines auf die Welle (5) ausgeübten Drehmoments basieren auf dem ersten Messsignal, dem zweiten Messsignal, dem dritten Messsignal und einem Verhältnis eines Abstands (23) zwischen dem zweiten Magnetfeldsensor (2) und dem dritten Magnetfeldsensor (3) in der Axialrichtung (111) zu einem Abstand (12) zwischen dem ersten Magnetfeldsensor (1) und dem zweiten Magnetfeldsensor (2) in der Axialrichtung (111).

## Claims

1. Magnetoelastic torque sensor (10), comprising:

- a shaft (5) having only one first magnetized region (51) and a second magnetized region (52), wherein the first magnetized region (51) and the second magnetized region (52) have opposite magnetizations,
- wherein the shaft (5) has an axial direction (111) and a radial direction (112),
- at least three magnetic field sensors which each have at least one measurement axis and are configured to capture a component of a magnetic flux density of a magnetic field in the direction of the at least one measurement axis, and
- an evaluation unit (6),
- wherein the at least three magnetic field sensors comprise a first magnetic field sensor (1), a second magnetic field sensor (2) and a third magnetic field sensor (3), wherein the second magnetic field sensor (2) is arranged in the axial direction (111) between the first magnetic field sensor (1) and the third magnetic field sensor (3),

- wherein the first magnetic field sensor (1) and the second magnetic field sensor (2) are assigned to the first magnetized region (51) and the third magnetic field sensor (3) is assigned to the second magnetized region (52),
- wherein at least one of the at least three magnetic field sensors is arranged relative to the at least one magnetized region (51; 52) in such a way that the magnetic field sensor is configured to capture a component of a magnetic flux density of a magnetic field in the direction of the respective at least one measurement axis, wherein the magnetic field can be generated by the at least one magnetized region (51; 52) when the shaft (5) is loaded with torque, and
- wherein the evaluation unit (6) is configured to capture at least one measurement signal from the first magnetic field sensor (1), at least one measurement signal from the second magnetic field sensor (2) and at least one measurement signal from the third magnetic field sensor (3) and to determine a torque exerted on the shaft (5) based on the at least one measurement signal from the first magnetic field sensor (1), the at least one measurement signal from the second magnetic field sensor (2), the at least one measurement signal from the third magnetic field sensor (3) and a ratio of a distance (23) between the second magnetic field sensor (2) and the third magnetic field sensor (3) in the axial direction (111) to a distance (12) between the first magnetic field sensor (1) and the second magnetic field sensor (2) in the axial direction (111).

2. Magnetoelastic torque sensor (10) according to Claim 1, wherein the at least one measurement axis of the first magnetic field sensor (1) and/or the at least one measurement axis of the second magnetic field sensor (2) and/or the at least one measurement axis of the third magnetic field sensor (3) each comprise a measurement axis that is parallel in the axial direction (111) or the radial direction (112) of the shaft (5), wherein the at least one measurement signal from the first magnetic field sensor (1) comprises a first measurement signal corresponding to a component of the magnetic flux density of the magnetic field in the axial direction (111) or the radial direction (112) of the shaft (5) at the position of the first magnetic field sensor (1) and/or the at least one measurement signal from the second magnetic field sensor (2) comprises a second measurement signal corresponding to a component of the magnetic flux density of the magnetic field in the axial direction (111) or the radial direction (112) of the shaft (5) at the position of the second magnetic field sensor (2) and/or the at least one measurement signal from the third magnetic field sensor (3) comprises a third measurement signal corresponding to a component of the magnetic flux density of the magnetic field in the axial direction (111) or the radial direction (112) of the shaft (5) at the position of the third magnetic field sensor (3), or wherein the at least one measurement axis of the first magnetic field sensor (1) and/or the at least one measurement axis of the second magnetic field sensor (2) and/or the at least one measurement axis of the third magnetic field sensor (3) each comprise two or three measurement axes oriented orthogonally to each other, wherein the at least one measurement signal from the first magnetic field sensor (1) comprises two or three measurement signals and/or the at least one measurement signal from the second magnetic field sensor (2) comprises two or three measurement signals and/or the at least one measurement signal from the third magnetic field sensor (3) comprises two or three measurement signals, wherein a component of the magnetic flux density of the magnetic field in the axial direction (111) or the radial direction (112) of the shaft (5) at the respective position of the magnetic field sensor can be determined from the two or three measurement signals from a respective magnetic field sensor.

3. Magnetoelastic torque sensor (10) according to Claim 1, wherein the evaluation unit (6) is configured to additionally use a sensitivity of the magnetoelastic torque sensor (10) to determine the torque exerted on the shaft (5).

4. Magnetoelastic torque sensor (10) according to Claim 3, wherein the evaluation unit is configured to determine the torque exerted on the shaft (5) by means of the formula

$$M = \left[ (B_{SE2} - B_{SE3}) - \frac{d_{23}}{d_{12}} \times (B_{SE1} - B_{SE2}) \right] \times s_{13}$$

, where:

• M is the torque to be determined in "Nm",
• $B_{SE1}$ is the component of the magnetic flux density of the magnetic field in the axial direction or in the radial direction at the position of the first magnetic field sensor in "$\mu$T",
• $B_{SE2}$ is the component of the magnetic flux density of the magnetic field in the axial direction or in the radial direction at the position of the second magnetic field sensor in "$\mu$T",
• $B_{SE3}$ is the component of the magnetic flux density of the magnetic field in the axial direction or in the radial direction at the position of the third magnetic field sensor in "$\mu$T",
• $d_{12}$ is the distance (12) between the first magnetic field sensor (1) and the second magnetic field sensor (2) in

"mm",
- $d_{23}$ is the distance (23) between the second magnetic field sensor (2) and the third magnetic field sensor (3) in "mm",
- and $s_{13}$ is the sensitivity of the magnetoelastic torque sensor (10) in "Nm/$\mu$T".

5. Magnetoelastic torque sensor (10) according to Claim 3, wherein the evaluation unit (6) is configured to determine the torque exerted on the shaft (5) by means of the formula

$$M = \left[ (B_{SE2} - B_{SE3}) - k \times \frac{d_{23}}{d_{12}} \times (B_{SE1} - B_{SE2}) \right] \times s_{13}$$

with $0 \leq k \leq 1$,
In particular with $0.9 \leq k \leq 1$ or $1 < k \leq 1.1$
, where:

- M is the torque to be determined in "Nm",
- $B_{SE1}$ is the component of the magnetic flux density of the magnetic field in the axial direction or in the radial direction at the position of the first magnetic field sensor in "$\mu$T",
- $B_{SE2}$ is the component of the magnetic flux density of the magnetic field in the axial direction or in the radial direction at the position of the second magnetic field sensor in "$\mu$T",
- $B_{SE3}$ is the component of the magnetic flux density of the magnetic field in the axial direction or in the radial direction at the position of the third magnetic field sensor in "$\mu$T",
- $d_{12}$ is the distance (12) between the first magnetic field sensor (1) and the second magnetic field sensor (2) in "mm",
- $d_{23}$ is the distance (23) between the second magnetic field sensor (2) and the third magnetic field sensor (3) in "mm",
- $s_{13}$ is the sensitivity of the magnetoelastic torque sensor (10) in "Nm/$\mu$T", and
- k is a weight factor.

6. Magnetoelastic torque sensor (10) according to one of the preceding claims, wherein the first magnetic field sensor (1), the second magnetic field sensor (2) and the third magnetic field sensor (3) are arranged relative to each other and relative to the only one first magnetized region (51) and the second magnetized region (52) in such a way that one of the following two conditions is met:

$$\left| (N_{SE2} - N_{SE3}) - \frac{d_{23}}{d_{12}} \times (N_{SE1} - N_{SE2}) \right| > 0 \ \mu T \quad \text{mit} \quad \frac{d_{23}}{d_{12}} \leq 1$$

$$\left| (N_{SE1} - N_{SE2}) - \frac{d_{12}}{d_{23}} \times (N_{SE2} - N_{SE3}) \right| > 0 \ \mu T \quad \text{mit} \quad \frac{d_{12}}{d_{23}} < 1,$$

wherein the first magnetic field sensor (1), the second magnetic field sensor (2) and the third magnetic field sensor (3) are arranged relative to each other and relative to the only one first magnetized region (51) and the second magnetized region (52) in particular in such a way that one of the following two conditions is met:

$$\left| (N_{SE2} - N_{SE3}) - \frac{d_{23}}{d_{12}} \times (N_{SE1} - N_{SE2}) \right| > 50 \ \mu T \quad \text{mit} \quad \frac{d_{23}}{d_{12}} \leq 1$$

$$\left| (N_{SE1} - N_{SE2}) - \frac{d_{12}}{d_{23}} \times (N_{SE2} - N_{SE3}) \right| > 50 \ \mu T \quad \text{mit} \quad \frac{d_{12}}{d_{23}} < 1,$$

where:

- $N_{SE1}$ is a predetermined component of the magnetic flux density in "$\mu$T" of a magnetic field generated by the at least one magnetized region (51; 52) at a position of the first magnetic field sensor (1) due to the shaft (5) being loaded with a maximum torque measurable by the magnetoelastic torque sensor (10),

• $N_{SE2}$ is a predetermined component of the magnetic flux density in "$\mu$T" of a magnetic field generated by the at least one magnetized region (51; 52) at a position of the second magnetic field sensor (2) due to the shaft (5) being loaded with the maximum torque measurable by the magnetoelastic torque sensor (10), and

• $N_{SE3}$ is a predetermined component of the magnetic flux density in "$\mu$T" of a magnetic field generated by the at least one magnetized region (51; 52) at a position of the third magnetic field sensor (3) due to the shaft (5) being loaded with a maximum torque measurable by the magnetoelastic torque sensor (10).

7. Magnetoelastic torque sensor (10) according to one of the preceding claims, wherein a sum of the distance (12) between the first magnetic field sensor (1) and the second magnetic field sensor (2) in the axial direction (111) and the distance (23) between the second magnetic field sensor (2) and the third magnetic field sensor (3) in the axial direction (111) is greater than or equal to 4 mm and less than 20 mm.

8. Magnetoelastic torque sensor (10) according to one of Claims 1 to 3, wherein the at least three magnetic field sensors comprise the first magnetic field sensor (1), the second magnetic field sensor (2), the third magnetic field sensor (3) and a fourth magnetic field sensor (4), wherein the third magnetic field sensor (3) is arranged in the axial direction (111) between the second magnetic field sensor (2) and the fourth magnetic field sensor (4), wherein the evaluation unit (6) is configured to capture at least one measurement signal from the fourth magnetic field sensor (4) and to additionally use the at least one measurement signal from the fourth magnetic field sensor (4) and a ratio of a distance (23) between the second magnetic field sensor (2) and the third magnetic field sensor (3) in the axial direction (111) to a distance (34) between the third magnetic field sensor (3) and the fourth magnetic field sensor (4) in the axial direction (111) to determine a torque exerted on the shaft (5).

9. Magnetoelastic torque sensor (10) according to Claim 8, wherein the at least one measurement axis of the fourth magnetic field sensor (4) comprises a measurement axis that is parallel in the axial direction (111) or the radial direction (112) of the shaft, wherein the at least one measurement signal from the fourth magnetic field sensor (4) comprises a fourth measurement signal corresponding to a component of the magnetic flux density of the magnetic field in the axial direction (111) or the radial direction (112) of the shaft (5) at the position of the fourth magnetic field sensor (4), or

wherein the at least one measurement axis of the fourth magnetic field sensor (4) comprises two or three measurement axes oriented orthogonally to each other, wherein the at least one measurement signal from the fourth magnetic field sensor (4) comprises two or three measurement signals, from which a component of the magnetic flux density of the magnetic field in the axial direction (111) or the radial direction (112) of the shaft (5) at the position of the fourth magnetic field sensor (4) can be determined.

10. Magnetoelastic torque sensor (10) according to Claim 8 or 9, wherein the evaluation unit (6) is configured to determine the torque exerted on the shaft (5) by means of the formula

$$M=\left[ (B_{SE2} - B_{SE3}) - k\times\frac{d_{23}}{d_{12}}\times(B_{SE1} - B_{SE2}) - (1 - k)\times\frac{d_{23}}{d_{34}}\times(B_{SE3} - B_{SE4}) \right] \times s_{14}$$

with $0\leq k\leq1$
, where:

• M is the torque to be determined in "Nm",
• $B_{SE1}$ is the component of the magnetic flux density of the magnetic field in the axial direction or in the radial direction at the position of the first magnetic field sensor in "$\mu$T",
• $B_{SE2}$ is the component of the magnetic flux density of the magnetic field in the axial direction or in the radial direction at the position of the second magnetic field sensor in "$\mu$T",
• $B_{SE3}$ is the component of the magnetic flux density of the magnetic field in the axial direction or in the radial direction at the position of the third magnetic field sensor in "$\mu$T",
• $B_{SE4}$ is the component of the magnetic flux density of the magnetic field in the axial direction or in the radial direction at the position of the fourth magnetic field sensor in "$\mu$T",

29

- $d_{12}$ is the distance (12) between the first magnetic field sensor (1) and the second magnetic field sensor (2) in "mm",
- $d_{23}$ is the distance (23) between the second magnetic field sensor (2) and the third magnetic field sensor (3) in "mm",
- $d_{34}$ is the distance (34) between the third magnetic field sensor (3) and the fourth magnetic field sensor (4) in "mm",
- and $s_{14}$ is the sensitivity of the magnetoelastic torque sensor (10) in "Nm/$\mu$T", and
- k is a weight factor.

**11.** Magnetoelastic torque sensor (10) according to Claims 8 to 10, wherein the first magnetic field sensor (1), the second magnetic field sensor (2), the third magnetic field sensor (3) and the fourth magnetic field sensor (4) are arranged relative to each other and relative to the only one first magnetized region (51) and the second magnetized region (52) in such a way that the following condition is met:

$$\left|(N_{SE2} - N_{SE3}) - k \times \frac{d_{23}}{d_{12}} \times (N_{SE1} - N_{SE2}) - (1 - k) \times \frac{d_{23}}{d_{34}} \times (N_{SE3} - N_{SE4})\right| > 0$$

$$\mu T$$

with $0 \leq k \leq 1$

wherein the first magnetic field sensor (1), the second magnetic field sensor (2), the third magnetic field sensor (3) and the fourth magnetic field sensor (4) are arranged relative to each other and relative to the only one first magnetized region (51) and the second magnetized region (52) in particular in such a way that the following condition is met:

$$\left|(N_{SE2} - N_{SE3}) - k \times \frac{d_{23}}{d_{12}} \times (N_{SE1} - N_{SE2}) - (1 - k) \times \frac{d_{23}}{d_{34}} \times (N_{SE3} - N_{SE4})\right| >$$

$$50 \ \mu T$$

with $0 \leq k \leq 1$
where:

- $N_{SE1}$ is a predetermined component of the magnetic flux density in "$\mu$T" of a magnetic field generated by the at least one magnetized region (51; 52) at a position of the first magnetic field sensor (1) due to the shaft (5) being loaded with a maximum torque measurable by the magnetoelastic torque sensor,
- $N_{SE2}$ is a predetermined component of the magnetic flux density in "$\mu$T" of a magnetic field generated by the at least one magnetized region (51; 52) at a position of the second magnetic field sensor (2) due to the shaft (5) being loaded with the maximum torque measurable by the magnetoelastic torque sensor, and
- $N_{SE3}$ is a predetermined component of the magnetic flux density in "$\mu$T" of a magnetic field generated by the at least one magnetized region (51; 52) at a position of the third magnetic field sensor (3) due to the shaft (5) being loaded with a maximum torque measurable by the magnetoelastic torque sensor,
- $N_{SE4}$ is a predetermined component of the magnetic flux density in "$\mu$T" of a magnetic field generated by the at least one magnetized region (51; 52) at a position of the fourth magnetic field sensor (4) due to the shaft (5) being loaded with a maximum torque measurable by the magnetoelastic torque sensor (10).

**12.** Magnetoelastic torque sensor (10) according to Claim 10 or 11, wherein a sum of the distance (12) between the first magnetic field sensor (1) and the second magnetic field sensor (2) in the axial direction (111), the distance (23) between the second magnetic field sensor (2) and the third magnetic field sensor (3) in the axial direction (111) and the distance (34) between the third magnetic field sensor (3) and the fourth magnetic field sensor (4) is greater than or equal to 6 mm and less than 20 mm.

**13.** Magnetoelastic torque sensor (10) according to one of the preceding claims, wherein the first magnetic field sensor (1) and the second magnetic field sensor (2) are assigned to the first magnetized region (51) and the third magnetic field sensor (3) and the fourth magnetic field sensor (4) are assigned to the second magnetized region (52).

**14.** Magnetoelastic torque sensor (10) according to one of the preceding claims, wherein the torque sensor (10) is configured to compensate for homogeneous interference fields and linear interference field gradients in the axial direction (111) of the shaft (5).

15. Magnetoelastic torque sensor (10) according to one of the preceding claims, wherein the first magnetized region (51) and the second magnetized region (52) have different amounts of magnetization.

16. Vehicle (100), comprising a magnetoelastic torque sensor (10) according to one of the preceding claims, wherein the vehicle (100) can be operated in particular electrically and/or by muscle power and has a crank drive (102), wherein the magnetoelastic torque sensor (10) is arranged on the crank drive (102).

17. Method for determining a torque using a magnetoelastic torque sensor (10) according to one of Claims 1 to 15, wherein the method comprises the following steps:

- capturing at least one measurement signal from the first magnetic field sensor (1),
- capturing at least one measurement signal from the second magnetic field sensor (2),
- capturing at least one measurement signal from the third magnetic field sensor (3), and
- determining a torque exerted on the shaft (5) based on the first measurement signal, the second measurement signal, the third measurement signal and a ratio of a distance (23) between the second magnetic field sensor (2) and the third magnetic field sensor (3) in the axial direction (111) to a distance (12) between the first magnetic field sensor (1) and the second magnetic field sensor (2) in the axial direction (111).

## Revendications

1. Capteur de couple de rotation magnéto-élastique (10), comprenant :

- un arbre (5) présentant uniquement une première zone magnétisée (51) et une seconde zone magnétisée (52), la première zone magnétisée (51) et la seconde zone magnétisée (52) présentant des magnétisations opposées,
- l'arbre (5) présentant une direction axiale (111) et une direction radiale (112),
- au moins trois capteurs de champ magnétique, qui présentent à chaque fois au moins un axe de mesure et qui sont conçus pour détecter une composante d'une densité de flux magnétique d'un champ magnétique dans la direction dudit au moins un axe de mesure et
- une unité d'évaluation (6),
- lesdits au moins trois capteurs de champ magnétique comprenant un premier capteur de champ magnétique (1), un deuxième capteur de champ magnétique (2) et un troisième capteur de champ magnétique (3), le deuxième capteur de champ magnétique (2) étant agencé dans la direction axiale (111) entre le premier capteur de champ magnétique (1) et le troisième capteur de champ magnétique (3),
- le premier capteur de champ magnétique (1) et le deuxième capteur de champ magnétique (2) étant associés à la première zone magnétisée (51) et le troisième capteur de champ magnétique (3) étant associé à la seconde zone magnétisée (52).
- au moins l'un des trois capteurs capteur de champ magnétique étant agencé par rapport à ladite au moins une zone magnétisée (51 ; 52) de telle sorte que le capteur de champ magnétique est conçu pour détecter une composante d'une densité de flux magnétique d'un champ magnétique dans la direction dudit au moins un axe de mesure respectif, le champ magnétique pouvant être généré par une sollicitation par un couple de rotation de l'arbre (5) par ladite au moins une zone magnétisée (51 ; 52) et
- l'unité d'évaluation (6) étant conçue pour détecter au moins un signal de mesure du premier capteur de champ magnétique (1), au moins un signal de mesure du deuxième capteur de champ magnétique (2) et au moins un signal de de mesure du troisième capteur de champ magnétique (3) et pour déterminer un couple de rotation exercé sur l'arbre (5) sur la base dudit au moins un signal de mesure du premier capteur de champ magnétique (1), dudit au moins un signal de mesure du deuxième capteur de champ magnétique (2), dudit au moins un signal de mesure du troisième capteur de champ magnétique (3) et d'un rapport d'une distance (23) entre le deuxième capteur de champ magnétique (2) et le troisième capteur de champ magnétique (3) dans la direction axiale (111) à une distance (12) entre le premier capteur de champ magnétique (1) et le deuxième capteur de champ magnétique (2) dans la direction axiale (111).

2. Capteur de couple de rotation magnéto-élastique (10) selon la revendication 1, ledit au moins un axe de mesure du premier capteur de champ magnétique (1) et/ou ledit au moins un axe de mesure du deuxième capteur de champ magnétique (2) et/ou ledit au moins un axe de mesure du troisième capteur de champ magnétique (3) comprenant à chaque fois un axe de mesure parallèle dans la direction axiale (111) ou dans la direction radiale (112) de l'arbre (5), ledit au moins un signal de mesure du premier capteur de champ magnétique (1) comprenant un premier signal de mesure, qui correspond à une composante de la densité de flux magnétique du champ magnétique dans la direction axiale (111) ou dans la direction radiale (112) de l'arbre (5) au niveau de la position du premier capteur de champ magnétique (1) et/ou ledit au moins un signal de mesure du deuxième capteur de champ magnétique (2) comprenant un deuxième signal de mesure, qui correspond à une composante de la densité de flux magnétique du champ magnétique dans la direction axiale (111) ou dans la direction radiale (112) de l'arbre (5) au niveau de la position du deuxième capteur de champ magnétique (2) et/ou ledit au moins un signal de mesure du troisième capteur de champ magnétique (3) comprenant un troisième signal de mesure, qui correspond à une composante de la densité de flux magnétique du champ magnétique dans la direction axiale (111) ou dans la direction radiale (112) de l'arbre (5) au niveau de la position du troisième capteur de champ magnétique (3) ou

ledit au moins un axe de mesure du premier capteur de champ magnétique (1) et/ou ledit au moins un axe de mesure du deuxième capteur de champ magnétique (2) et/ou ledit au moins un axe de mesure du troisième capteur de champ magnétique (3) comprenant à chaque fois deux ou trois axes de mesure orientés de manière orthogonale les uns par rapport aux autres, ledit au moins un signal de mesure du premier capteur de champ magnétique (1) comprenant deux ou trois signaux de mesure et/ou ledit au moins un signal de mesure du deuxième capteur de champ magnétique (2) comprenant deux ou trois signaux de mesure et/ou ledit au moins un signal de mesure du troisième capteur de champ magnétique (3) comprenant deux ou trois signaux de mesure, une composante de la densité de flux magnétique du champ magnétique dans la direction axiale (111) ou dans la direction radiale (112) de l'arbre (5) pouvant être déterminée au niveau de la position respective du capteur de champ magnétique à partir des deux ou trois signaux de mesure d'un capteur de champ magnétique respectif.

3. Capteur de couple de rotation magnéto-élastique (10) selon la revendication 1, l'unité d'évaluation (6) étant conçue pour utiliser, pour la détermination du couple de rotation exercé sur l'arbre (5), en plus une sensibilité du capteur de couple de rotation magnéto-élastique (10).

4. Capteur de couple de rotation magnéto-élastique (10) selon la revendication 3, l'unité d'évaluation étant conçue pour déterminer de couple de rotation exercé sur l'arbre (5) au moyen de la formule

$$M = \left[ (B_{SE2} - B_{SE3}) - \frac{d_{23}}{d_{12}} \times (B_{SE1} - B_{SE2}) \right] \times s_{13}$$

dans laquelle :

- M représente le couple de rotation à déterminer en "Nm",
- $B_{SE1}$ représente la composante de la densité de flux magnétique du champ magnétique dans la direction axiale ou, selon le cas, dans la direction radiale au niveau de la position du premier capteur de champ magnétique en "μT",
- $B_{SE2}$ représente la composante de la densité de flux magnétique du champ magnétique dans la direction axiale ou, selon le cas, dans la direction radiale au niveau de la position du deuxième capteur de champ magnétique en "μT",
- $B_{SE3}$ représente la composante de la densité de flux magnétique du champ magnétique dans la direction axiale ou, selon le cas, dans la direction radiale au niveau de la position du troisième capteur de champ magnétique en "μT",
- $d_{12}$ représente la distance (12) entre le premier capteur de champ magnétique (1) et le deuxième capteur de champ magnétique (2) en "mm",
- $d_{23}$ représente la distance (23) entre le deuxième capteur de champ magnétique (2) et le troisième capteur de champ magnétique (3) en "mm",
- et $s_{13}$ représente la sensibilité du capteur de couple de rotation magnéto-élastique (10) en "Nm/μT".

5. Capteur de couple de rotation magnéto-élastique (10) selon la revendication 3, l'unité d'évaluation (6) étant conçue pour déterminer de couple de rotation exercé sur l'arbre (5) au moyen de la formule

$$M = \left[ (B_{SE2} - B_{SE3}) - k \times \frac{d_{23}}{d_{12}} \times (B_{SE1} - B_{SE2}) \right] \times s_{13}$$

où $0 \leq k \leq 1$,

en particulier 0,9≤k≤1 ou 1<k≤1,1
dans laquelle :

- M représente le couple de rotation à déterminer en "Nm",
- $B_{SE1}$ représente la composante de la densité de flux magnétique du champ magnétique dans la direction axiale ou, selon le cas, dans la direction radiale au niveau de la position du premier capteur de champ magnétique en "µT",
- $B_{SE2}$ représente la composante de la densité de flux magnétique du champ magnétique dans la direction axiale ou, selon le cas, dans la direction radiale au niveau de la position du deuxième capteur de champ magnétique en "µT",
- $B_{SE3}$ représente la composante de la densité de flux magnétique du champ magnétique dans la direction axiale ou, selon le cas, dans la direction radiale au niveau de la position du troisième capteur de champ magnétique en "µT",
- $d_{12}$ représente la distance (12) entre le premier capteur de champ magnétique (1) et le deuxième capteur de champ magnétique (2) en "mm",
- $d_{23}$ représente la distance (23) entre le deuxième capteur de champ magnétique (2) et le troisième capteur de champ magnétique (3) en "mm",
- $s_{13}$ représente la sensibilité du capteur de couple de rotation magnéto-élastique (10) en "Nm/µT" et
- k est un facteur de pondération.

6. Capteur de couple de rotation magnéto-élastique (10) selon l'une des revendications précédentes, le premier capteur de champ magnétique (1), le deuxième capteur de champ magnétique (2) et le troisième capteur de champ magnétique (3) étant agencés les uns par rapport aux autres et par rapport à ladite uniquement une première zone magnétisée (51) et à la seconde zone magnétisée (52) de telle sorte que l'une des deux conditions suivantes est satisfaite :

$$\left| (N_{SE2} - N_{SE3}) - \frac{d_{23}}{d_{12}} \times (N_{SE1} - N_{SE2}) \right| > 0 \ \mu T$$

mit $\dfrac{d_{23}}{d_{12}} \leq 1$

$$\left| (N_{SE1} - N_{SE2}) - \frac{d_{12}}{d_{23}} \times (N_{SE2} - N_{SE3}) \right| > 0 \ \mu T$$

mit $\dfrac{d_{12}}{d_{23}} < 1$,

le premier capteur de champ magnétique (1), le deuxième capteur de champ magnétique (2) et le troisième capteur de champ magnétique (3) étant agencés les uns par rapport aux autres et par rapport à ladite uniquement une première zone magnétisée (51) et à la seconde zone magnétisée (52) en particulier de telle sorte que l'une des deux conditions suivantes est satisfaite :

$$\left| (N_{SE2} - N_{SE3}) - \frac{d_{23}}{d_{12}} \times (N_{SE1} - N_{SE2}) \right| > 50 \ \mu T$$

mit $\dfrac{d_{23}}{d_{12}} \leq 1$

$$\left| (N_{SE1} - N_{SE2}) - \frac{d_{12}}{d_{23}} \times (N_{SE2} - N_{SE3}) \right| > 50 \ \mu T$$

$$\text{mit } \frac{d_{12}}{d_{23}} < 1 \text{ ,}$$

dans lesquelles :

- $N_{SE1}$ représente une composante déterminée au préalable de la densité de flux magnétique en "$\mu$T" d'un champ magnétique généré par ladite au moins une zone magnétisée (51, 52) au niveau d'une position du premier capteur de champ magnétique (1) sur la base d'une sollicitation de l'arbre (5) par un couple de rotation maximal mesurable par le capteur de couple de rotation magnéto-élastique (10),
- $N_{SE2}$ représente une composante déterminée au préalable de la densité de flux magnétique en "$\mu$T" d'un champ magnétique généré par ladite au moins une zone magnétisée (51, 52) au niveau d'une position du deuxième capteur de champ magnétique (2) sur la base d'une sollicitation de l'arbre (5) par le couple de rotation maximal mesurable par le capteur de couple de rotation magnéto-élastique (10) et
- $N_{SE3}$ représente une composante déterminée au préalable de la densité de flux magnétique en "$\mu$T" d'un champ magnétique généré par ladite au moins une zone magnétisée (51, 52) au niveau d'une position du troisième capteur de champ magnétique (3) sur la base d'une sollicitation de l'arbre (5) par un couple de rotation maximal mesurable par le capteur de couple de rotation magnéto-élastique (10).

7. Capteur de couple de rotation magnéto-élastique (10) selon l'une des revendications précédentes, une somme de la distance (12) entre le premier capteur de champ magnétique (1) et le deuxième capteur de champ magnétique (2) dans la direction axiale (111) et de la distance (23) entre le deuxième capteur de champ magnétique (2) et le troisième capteur de champ magnétique (3) dans la direction axiale (111) étant supérieure ou égale à 4 mm et inférieure à 20 mm.

8. Capteur de couple de rotation magnéto-élastique (10) selon l'une des revendications 1 à 3, lesdits au moins trois capteurs de champ magnétique comprenant le premier capteur de champ magnétique (1), le deuxième capteur de champ magnétique (2), le troisième capteur de champ magnétique (3) et un quatrième capteur de champ magnétique (4), le troisième capteur de champ magnétique (3) étant agencé dans la direction axiale (111) entre le deuxième capteur de champ magnétique (2) et le quatrième capteur de champ magnétique (4), l'unité d'évaluation (6) étant conçue pour détecter au moins un signal de mesure du quatrième capteur de champ magnétique (4) et, pour la détermination d'un couple de rotation exercé sur l'arbre (5), pour utiliser en plus ledit au moins un signal de mesure du quatrième capteur de champ magnétique (4) et un rapport d'une distance (23) entre le deuxième capteur de champ magnétique (2) et le troisième capteur de champ magnétique (3) dans la direction axiale (111) à une distance (34) entre le troisième capteur de champ magnétique (3) et le quatrième capteur de champ magnétique (4) dans la direction axiale (111).

9. Capteur de couple de rotation magnéto-élastique (10) selon la revendication 8, ledit au moins un axe de mesure du quatrième capteur de champ magnétique (4) comprenant un axe de mesure parallèle dans la direction axiale (111) ou dans la direction radiale (112) de l'arbre, ledit au moins un signal de mesure du quatrième capteur de champ magnétique (4) comprenant un quatrième signal de mesure qui correspond à une composante de la densité de flux magnétique du champ magnétique dans la direction axiale (111) ou dans la direction radiale (112) de l'arbre (5) au niveau de la position du quatrième capteur de champ magnétique (4) ou
ledit au moins un axe de mesure du quatrième capteur de champ magnétique (4) comprenant deux ou trois axes de mesure orientés de manière orthogonale les uns par rapport aux autres, ledit au moins un signal de mesure du quatrième capteur de champ magnétique (4) comprenant deux ou trois signaux de mesure, à partir desquels une composante de la densité de flux magnétique du champ magnétique dans la direction axiale (111) ou dans la direction radiale (112) de l'arbre (5) au niveau de la position du quatrième capteur de champ magnétique (4) peut être déterminée.

10. Capteur de couple de rotation magnéto-élastique (10) selon la revendication 8 ou 9, l'unité d'évaluation (6) étant conçue pour déterminer le couple de rotation exercé sur l'arbre (5) au moyen de la formule

$$M = \left[ (B_{SE2} - B_{SE3}) - k \times \frac{d_{23}}{d_{12}} \times (B_{SE1} - B_{SE2}) - (1-k) \times \frac{d_{23}}{d_{34}} \times (B_{SE3} - B_{SE4}) \right] \times s_{14}$$

où 0≤k≤1

dans laquelle :

- M représente le couple de rotation à déterminer en "Nm",
- $B_{SE1}$ représente la composante de la densité de flux magnétique du champ magnétique dans la direction axiale ou, selon le cas, dans la direction radiale au niveau de la position du premier capteur de champ magnétique en "μT",
- $B_{SE2}$ représente la composante de la densité de flux magnétique du champ magnétique dans la direction axiale ou, selon le cas, dans la direction radiale au niveau de la position du deuxième capteur de champ magnétique en "μT",
- $B_{SE3}$ représente la composante de la densité de flux magnétique du champ magnétique dans la direction axiale ou, selon le cas, dans la direction radiale au niveau de la position du troisième capteur de champ magnétique en "μT",
- $B_{SE4}$ représente la composante de la densité de flux magnétique du champ magnétique dans la direction axiale ou, selon le cas, dans la direction radiale au niveau de la position du quatrième capteur de champ magnétique en "μT",
- $d_{12}$ représente la distance (12) entre le premier capteur de champ magnétique (1) et le deuxième capteur de champ magnétique (2) en "mm",
- $d_{23}$ représente la distance (23) entre le deuxième capteur de champ magnétique (2) et le troisième capteur de champ magnétique (3) en "mm",
- $d_{34}$ représente la distance (34) entre le troisième capteur de champ magnétique (3) et le quatrième capteur de champ magnétique (4) en "mm",
- et $s_{14}$ représente la sensibilité du capteur de couple de rotation magnéto-élastique (10) en "Nm/μT" et
- k est un facteur de pondération.

11. Capteur de couple de rotation magnéto-élastique (10) selon la revendication 8 à 10, le premier capteur de champ magnétique (1), le deuxième capteur de champ magnétique (2), le troisième capteur de champ magnétique (3) et le quatrième capteur de champ magnétique (4) étant agencés les uns par rapport aux autres et par rapport à ladite uniquement une première zone magnétisée (51) et à la seconde zone magnétisée (52) de telle sorte que la condition suivante est satisfaite :

$$\left| (N_{SE2} - N_{SE3}) - k \times \frac{d_{23}}{d_{12}} \times (N_{SE1} - N_{SE2}) - (1-k) \times \frac{d_{23}}{d_{34}} \times (N_{SE3} - N_{SE4}) \right| > 0$$

$$\mu T$$

où 0≤k≤1

le premier capteur de champ magnétique (1), le deuxième capteur de champ magnétique (2), le troisième capteur de champ magnétique (3) et le quatrième capteur de champ magnétique (4) étant agencés les uns par rapport aux autres et par rapport à ladite uniquement une première zone magnétisée (51) et à la seconde zone magnétisée (52) en particulier de telle sorte que la condition suivante est satisfaite :

$$\left| (N_{SE2} - N_{SE3}) - k \times \frac{d_{23}}{d_{12}} \times (N_{SE1} - N_{SE2}) - (1-k) \times \frac{d_{23}}{d_{34}} \times (N_{SE3} - N_{SE4}) \right| >$$

$$50 \ \mu T$$

où 0≤k≤1

dans lesquelles :

- $N_{SE1}$ représente une composante déterminée au préalable de la densité de flux magnétique en "μT" d'un champ magnétique généré par ladite au moins une zone magnétisée (51, 52) au niveau d'une position du premier capteur de champ magnétique (1) sur la base d'une sollicitation de l'arbre (5) par un couple de rotation maximal mesurable par le capteur de couple de rotation magnéto-élastique,
- $N_{SE2}$ représente une composante déterminée au préalable de la densité de flux magnétique en "μT" d'un champ magnétique généré par ladite au moins une zone magnétisée (51, 52) au niveau d'une position du deuxième capteur de champ magnétique (2) sur la base d'une sollicitation de l'arbre (5) par le couple de rotation maximal mesurable par le capteur de couple de rotation magnéto-élastique,

• $N_{SE3}$ représente une composante déterminée au préalable de la densité de flux magnétique en "µT" d'un champ magnétique généré par ladite au moins une zone magnétisée (51, 52) au niveau d'une position du troisième capteur de champ magnétique (3) sur la base d'une sollicitation de l'arbre (5) par un couple de rotation maximal mesurable par le capteur de couple de rotation magnéto-élastique,

• $N_{SE4}$ représente une composante déterminée au préalable de la densité de flux magnétique en "µT" d'un champ magnétique généré par ladite au moins une zone magnétisée (51, 52) au niveau d'une position du quatrième capteur de champ magnétique (4) sur la base d'une sollicitation de l'arbre (5) par un couple de rotation maximal mesurable par le capteur de couple de rotation magnéto-élastique (10).

12. Capteur de couple de rotation magnéto-élastique (10) selon la revendication 10 ou 11, une somme de la distance (12) entre le premier capteur de champ magnétique (1) et le deuxième capteur de champ magnétique (2) dans la direction axiale (111), de la distance (23) entre le deuxième capteur de champ magnétique (2) et le troisième capteur de champ magnétique (3) dans la direction axiale (111) et de la distance (34) entre le troisième capteur de champ magnétique (3) et le quatrième capteur de champ magnétique (4) étant supérieure ou égale à 6 mm et inférieure à 20 mm.

13. Capteur de couple de rotation magnéto-élastique (10) selon l'une des revendications précédentes, le premier capteur de champ magnétique (1) et le deuxième capteur de champ magnétique (2) étant associés à la première zone magnétisée (51) et le troisième capteur de champ magnétique (3) et le quatrième capteur de champ magnétique (4) étant associés à la seconde zone magnétisée (52).

14. Capteur de couple de rotation magnéto-élastique (10) selon l'une des revendications précédentes, le capteur de couple de rotation (10) étant conçu pour compenser des champs parasites homogènes et des gradients de champ parasite linéaires dans la direction axiale (111) de l'arbre (5).

15. Capteur de couple de rotation magnéto-élastique (10) selon l'une des revendications précédentes, la première zone magnétisée (51) et la seconde zone magnétisée (52) présentant une magnétisation différente en termes de valeur.

16. Véhicule (100), comprenant un capteur de couple de rotation magnéto-élastique (10) selon l'une des revendications précédentes, le véhicule (100) pouvant être actionné en particulier électriquement et/ou par la force musculaire et présentant un mécanisme à pédales (102), le capteur de couple de rotation magnéto-élastique (10) étant agencé sur le mécanisme à pédales (102).

17. Procédé pour la détermination d'un couple de rotation à l'aide d'un capteur de couple de rotation magnéto-élastique (10) selon l'une des revendications 1 à 15, le procédé comprenant les étapes suivantes :

- détection d'au moins un signal de mesure du premier capteur de champ magnétique (1),
- détection d'au moins un signal de mesure du deuxième de champ magnétique (2),
- détection d'au moins un signal de mesure du troisième capteur de champ magnétique (3) et
- détermination d'un couple de rotation exercé sur l'arbre (5) sur la base du premier signal de mesure, du deuxième signal de mesure, du troisième signal de mesure et d'un rapport d'une distance (23) entre le deuxième capteur de champ magnétique (2) et le troisième capteur de champ magnétique (3) dans la direction axiale (111) à une distance (12) entre le premier capteur de champ magnétique (1) et le deuxième capteur de champ magnétique (2) dans la direction axiale (111).

# Fig. 1

# Fig. 2

## Fig. 3

## Fig. 4

**Fig. 5**

**Fig. 6**

# Fig. 7

# Fig. 8

## Fig. 9

## Fig. 10

## Fig. 11

## Fig. 12

## Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2013125669 A1
- WO 2018109674 A1
- US 4989460 A